# EUROPÄISCHE PATENTSCHRIFT

(11) **EP 3 751 544 B1**
(45) Veröffentlichungstag und Bekanntmachung des Hinweises auf die Patenterteilung: **21.08.2024**
(21) Anmeldenummer: 20189991.1
(22) Anmeldetag: 13.06.2014
(51) Int. Cl.: G09B 9/04, G09B 9/05, G09B 9/06, A63G 31/16, B60G 17/00, B60G 21/00

(54) **HOCHDYNAMISCHER SELBSTFAHRENDER FAHRSIMULATOR**
HIGHLY DYNAMIC SELF-PROPELLING DRIVING SIMULATOR
SIMULATEUR DE CONDUITE AUTOMATIQUE HAUTEMENT DYNAMIQUE

(30) Priorität: 13.06.2013 AT 20213 U; 11.11.2013 AT 8662013
(43) Veröffentlichungstag der Anmeldung: 16.12.2020
(62) Teilanmeldung aus: 14730511.4
(73) Patentinhaber: AMST-Systemtechnik GmbH, 5282 Ranshofen (AT)
(72) Erfinder: Tischer, Wolfgang, 5282 Ranshofen (AT); Prokop, Günther, 01259 Dresden (DE)
(74) Vertreter: Puchberger & Partner Patentanwälte

(56) Entgegenhaltungen:
- EP-A2- 1 231 582
- EP-A2- 1 657 140
- WO-A1-2012/153875
- WO-A1-92/05995
- WO-A1-99/56846
- DE-A1- 10 119 486
- DE-A1- 2 842 409
- US-A- 4 159 128
- US-A- 4 266 627
- US-A1- 2002 197 585
- L D CHEN ET AL: "NADS AT THE UNIVERSITY OF IOWA: A TOOL FOR DRIVING SAFETY RESEARCH", PROCEEDINGS OF THE 1ST HUMAN-CENTERED TRANSPORTATION 'SIMULATION CONFERENCE, 1 January 2001 (2001-01-01), XP055137483, ISSN: 1538-3288, Retrieved from the Internet <URL:https://www.nads-sc.uiowa.edu/dscna/2001/Papers/Chen_NADS%20at%20the%20University%20of%20Iowa....pdf> [retrieved on 20140901]
- SLOB ET AL: "State-of-the-Art Driving Simulators, a Literature Survey", INTERNET CITATION, 1 August 2008 (2008-08-01), pages Complete, XP007910411, Retrieved from the Internet <URL:http://www.mate.tue.nl/mate/pdfs/9611.pdf> [retrieved on 20091103]
- BETZ ET AL: "Driving Simulation Conference 2012 Motion Analysis of a Wheeled Mobile Driving Simulator for Urban Traffic Situations", 7 September 2012 (2012-09-07), XP055742648, Retrieved from the Internet <URL:http://dsc2015.tuebingen.mpg.de/Docs/DSC_Proceedings/2012/DSC12_04_Betz.pdf> [retrieved on 20201022]
- J SLOB ET AL: "A new approach to extended linear motion technology: the wall is the limit", DRIVING SIMULATION CONFERENCE 2009 (DSC 2009 EUROPE) 4-6 FEBRUARY, MONACO, MONACO, 1 January 2009 (2009-01-01), XP055742685

## Beschreibung

Die Erfindung betrifft einen Fahrsimulator, insbesondere einen selbstfahrenden Fahrsimulator mit einem Maschinengestell, das über drei, bevorzugt vier oder mehr Radbaugruppen auf einem Untergrund verfahrbar ist, wobei die Radbaugruppen jeweils zumindest ein auf dem Untergrund verfahrbares Rad umfassen, das um eine Lenkachse drehbar angeordnet ist, wobei das Maschinengestell mit einer Steuerkanzel gekoppelt ist, die einen Sitz für eine Person sowie Bedienelemente zur Steuerung des Fahrsimulators umfasst.

Typische Anwendungsbereiche des Simulators liegen in den Bereichen der Fahrzeugentwicklung, Verkehrssicherheit, Mobilität, integralen Sicherheit, Fahrerassistenzsysteme und automotiven Grundlagenforschung.

Es sind Fahrsimulatoren bekannt, bei denen ein verfahrbarer Schlitten über Bewegungskomponenten in einem vorbestimmten Bewegungsraum verschoben werden kann. Diese Bewegungskomponenten sind beispielsweise als Traversen, ähnlich einer Laufkatze, ausgeführt. Die Dynamik und die Einsatzflächen dieser Stand der Technik-Simulatoren sind durch die Masse der Bewegungskomponenten stark eingeschränkt. Dies macht die Simulation hochdynamischer Fahrmanöver unmöglich oder stark eingeschränkt.

insbesondere betrifft die Erfindung einen Fahrsimulator, wie er in der österreichischen Gebrauchsmusteranmeldung GM202/2013 beschrieben ist. Herkömmliche Simulatoren sind unter anderem aus der EP 1 231 582 A2, US 2002/197585 A1, der DE 101 19 486 A1 und der WO 92/05995 A1 bekannt.

Der Fahrsimulator kann als automobiles Versuchsfahrzeug ausgeführt sein, der ein voll funktionsfähiges Cockpit mit Sitz, Instrumentenbrett, Steuerelemente mit Kraftrückkopplung, Rückspiegel und/oder sonstige Bedienelemente umfasst. Das Cockpit kann entweder generisch oder gegebenenfalls typenspezifisch ausgeführt sein. Das nachgebildete Cockpit des Fahrzeuges kann ergonomisch und funktional möglichst genau dem Cockpit eines realen PKW entsprechen. Dies beinhaltet z.B. die Sicht durch die Front- und Seitenscheiben, die Innen- und Außenspiegel sowie die entsprechenden Merkmale der PKW-Karosserie (z.B. A- und B-Säulen, Mittelkonsole, Innenraum, Tür von innen etc.).

Das Cockpit und/oder die Steuerkanzel sind bevorzugt fest und insbesondere starr mit einem Element einer Bewegungsvorrichtung des Simulators verbunden, die eine aktiv gesteuerte oder geregelte Bewegung des Cockpits um vorbestimmte Freiheitsgrade gegenüber dem Maschinengestell zulässt.

Der Fahrsimulator ist bevorzugt als selbstfahrendes, aus einem Cockpit heraus steuerbares Fahrzeug ausgeführt, das von der Person im Cockpit sitzend insbesondere in-the-loop gesteuert werden kann.

Ferner kann eine Bildwiedergabefläche zur Darstellung einer realen oder computergenerierten Au βensicht vorgesehen sein.

Die Räder sind bevorzugt als Reifen ausgeführt. Es können je nach Belastung handelsübliche PKW- Reifen oder LKW-Reifen verwendet werden.

Das Fahrzeug kann sich auf einer Fläche im Wesentlichen frei bewegen.

Beispielhafte, ausgewählte technische Parameter für eine bevorzugte Ausführung sind: Querbeschleunigungen in x und y: ±1 G; Bandbreite Quer-(lateral)-Beschleunigungen, Längs(longitudinal)-Beschleunigungen, Wanken: < 4 Hz (phasentreu - die phasentreue Darstellung bezieht sich insbesondere auf die Querbeschleunigung, inkl. Wanken, Gieren und auch auf die Längsbeschleunigung inkl. Nicken.); Bewegungsfläche in einer Halle: ca. 70 x 70 m oder größer; Geschwindigkeit bis ca. 50 km/h; Sichtfeld Außensicht: mind. 220° horizontal.

Bei der vorliegenden Erfindung handelt es sich um einen hochdynamischen, selbstfahrenden Fahrsimulator. Dieser ist insbesondere derart ausgestaltet, dass alle zur Simulation notwendigen Komponenten am Fahrsimulator selbst vorgesehen sind. Dies betrifft insbesondere auch jene Komponenten, die zur Bewegung des Fahrsimulators notwendig sind. Aus diesem Grund kann der Fahrsimulator auf einer beliebigen geeigneten Fahrfläche oder einem beliebigen geeigneten Untergrund (z.B. Fahrflächen mit hinreichend ebenem Untergrund, der einen hinreichend hohen Reibwert besitzt, z.B. Asphaltflächen, Betonflächen, Kunststoffbeläge etc.) eingesetzt werden, wodurch der Einsatzbereich oder der Bewegungsbereich im Wesentlichen unbegrenzt ist. Beispielhafte Fahrflächen bzw. ein beispielhafter Untergrund sind Betonflächen oder Asphaltflächen, Straßenzüge etc. Durch die erfindungsgemäße Konfiguration hat der Simulator einen Einsatzbereich von beispielsweise mehr als 500 Meter.

Der erfindungsgemäße Fahrsimulator bzw. das erfindungsgemäße Verfahren dient gegebenenfalls der Simulation von hochdynamischen Fahrzuständen. Beispiele für derartige Fahrmanöver sind Slalomfahrten, Ausweichmanöver, Bremsmanöver etc. sowie Manöver bei hohen Geschwindigkeiten von über 50km/h oder über 80km/h.

Die Charakteristik eines Fahrzeugs, insbesondere das Verhalten eines realen Fahrzeugs unter derartigen Beschleunigungsänderungen, ist wichtig für die Sicherheit und das Qualitätsempfinden des Fahrers. Moderne PKW-Fahrwerke sind hochkomplexe kinematische und insbesondere elastokinematische Vorrichtungen. Aufgabe moderner Fahrwerke ist es einerseits, das Fahrverhalten bzw. die Traktion zu optimieren. Andererseits ist es Aufgabe eines Fahrwerks, dem Fahrer eine fühlbare Rückmeldung über die herrschenden Kräfteverhältnisse zu geben. Die Intensität von Nick- oder Wankbewegungen beispielsweise soll eine nachvollziehbare Wiedergabe des herrschenden Fahrzustands wiederspiegeln. Eine weitere grundlegende Aufgabe eines Fahrwerks ist auch die Verbesserung des Fahrkomforts.

Auch das Bremsverhalten oder das Beschleunigungsverhalten, insbesondere auch die Abstufung eines Getriebes tragen unmittelbar zum Fahrgefühl bei.

Der erfindungsgemäße Simulator ermöglicht eine flexible dynamische Simulation unterschiedlicher Fahrwerksauslegungen, Bremscharakteristiken, Beschleunigungscharakteristiken, Getriebeabstufungen etc.. insbesondere können diese simulierten Fahreigenschaften und Charakteristiken durch einfache steuerungstechnische Wahlmöglichkeiten am Simulator verändert werden.

Durch die Ausgestaltung des Simulators ist es möglich, computergenerierte virtuelle Fahreigenschaften eines Fahrzeugs vor der Realisierung in einem Prototyp auf dem erfindungsgemäßen Fahrsimulator zu testen. Dadurch können in einer sehr frühen Phase der Fahrzeugentwicklung virtuell vorliegende Eigenschaften des zu konstruierenden Fahrzeugs in einer realen Umgebung getestet werden, ohne dafür die hohen Kosten eines Prototyps aufwenden zu müssen. Diese realen Tests der virtuell entwickelten Fahrmodelle sind jedoch nur mit einem hochdynamischen Fahrsimulator möglich, da anderenfalls die simulierten Abläufe zu stark von der Realität abweichen würden.

Aufgabe der Erfindung ist es, einen Fahrsimulator zu schaffen, der eine Verbesserung der dynamischen Simulation dadurch ermöglicht,
- dass die zu simulierenden Sinnesendrücke so flexibel und realitätsnah wie möglich dargestellt werden,
- wobei gleichzeitig die Sinneseindrücke der Bedienperson weitest möglich von Störeinflüssen der realen Umwelt und/oder des Simulators entkoppelt sein sollen.

Dies umfasst insbesondere das synergetische Zusammenspiel zwischen
- der Verbesserung der Entkopplung der Kanzel vom Untergrund durch Optimierung der dynamischen Radkinematik
- und der Optimierung der Simulation von Beschleunigungszuständen durch die Bewegung der Steuerkanzel gegenüber dem Untergrund und gegenüber dem Maschinengestell.

Durch beide Maßnahmen kann zusammen eine Verbesserung der dynamischen Simulation erzielt werden.

Die erfindungsgemäße Aufgabe wird insbesondere durch die Merkmale des Patenanspruchs 1 gelöst.

Die Entkopplung der Kanzel von Störeinflüssen der Umwelt und des Untergrunds geschieht insbesondere durch eine Kinematikanordnung, eine Bewegungsvorrichtung und gegebenenfalls durch eine Führungsvorrichtung und/oder eine abgeschlossene Steuerkanzel oder Außenhülle, durch die reale optische oder akustische Sinneseindrücke der Außenwelt abgeschirmt werden. Die Verbesserung der dynamischen Radkinematik wird ebenfalls durch diese Komponenten erzielt, wobei insbesondere die Drehbarkeit der Steuerkanzel gegenüber dem Maschinengestell sowie die Drehbarkeit der Radbaugruppen und die Kinematikanordnung erheblichen Einfluss darauf haben, dass der selbstfahrende Fahrsimulator zur Simulation hochdynamischer Bewegungen geeignet ist.

Die Erfindung betrifft insbesondere einen selbstfahrenden Fahrsimulator mit einem Maschinengestell, das über drei, bevorzugt vier oder mehr Radbaugruppen auf einem Untergrund verfahrbar ist, wobei die Radbaugruppen jeweils zumindest ein auf dem Untergrund verfahrbares Rad umfassen, das um eine Lenkachse drehbar angeordnet ist, wobei das Maschinengestell mit einer Steuerkanzel gekoppelt ist, die einen Sitz für eine Person sowie Bedienelemente zur Steuerung des Fahrsimulators umfasst, wobei eine Bewegungsvorrichtung vorgesehen ist, über die eine Neigung der Steuerkanzel gegenüber dem Maschinengestell um eine Nickachse und/oder eine Rollachse ermöglicht ist, wobei zumindest eine Radbaugruppe einen Radantrieb zum Antrieb eines Rades um die Radachse umfasst, wobei bevorzugt mehrere Radbaugruppen oder alle Radbaugruppen jeweils zumindest einen Radantrieb zum Antrieb eines Rades um die jeweilige Radachse umfassen, und wobei die Radbaugruppen und/oder die Räder über eine Kinematikanordnung, die insbesondere als Fahrwerk ausgestaltet ist, mit dem Maschinengestell verbunden sind, wobei die Kinematikanordnung zur Dämpfung und/oder Federung von Unebenheiten des Untergrundes elastische und/oder dämpfende Elemente wie beispielsweise eine Feder-Dämpfer-Anordnung und eine Radaufhängung umfasst.

Gegebenenfalls umfasst die Erfindung einen selbstfahrenden Fahrsimulator mit einem Maschinengestell, das über drei, bevorzugt vier oder mehr Radbaugruppen auf einem Untergrund verfahrbar ist, wobei die Radbaugruppen jeweils zumindest ein auf dem Untergrund verfahrbares Rad umfassen, das um eine Lenkachse drehbar angeordnet ist, wobei das Maschinengestell mit einer Steuerkanzel gekoppelt ist, die einen Sitz für eine Person sowie Bedienelemente zur Steuerung des Fahrsimulators umfasst,
wobei die Steuerkanzel gegenüber dem Maschinengestell einen Drehfreiheitsgrad aufweist, sodass die Steuerkanzel gegenüber dem Maschinengestell um eine Hauptdrehachse gedreht werden kann und wobei die Hauptdrehachse bevorzugt im Wesentlichen ein Normalvektor der durch die Radaufstandsflächen der Räder auf dem Untergrund aufgespannten Ebene ist.

Gegebenenfalls ist vorgesehen, dass zumindest eine Radbaugruppe einen Radantrieb zum Antrieb eines Rades um die Radachse umfasst, wobei bevorzugt mehrere Radbaugruppen oder alle Radbaugruppen jeweils zumindest einen Radantrieb zum Antrieb eines Rades um die jeweilige Radachse umfassen.

Gegebenenfalls ist vorgesehen, dass das Rad oder dass die Räder jeder Radbaugruppe über 360°, insbesondere beliebig, unbegrenzt und/oder in beide Drehrichtungen um die Lenkachse drehbar sind.

Gegebenenfalls ist vorgesehen, dass die Steuerkanzel gegenüber dem Maschinengestell über 360°, bevorzugt beliebig, unbegrenzt und/oder in beide Drehrichtungen um die Hauptdrehachse drehbar ist.

Gegebenenfalls ist vorgesehen, dass die Räder einer, zweier, dreier, oder aller Radbaugruppen über einen Lenkantrieb aktiv lenkbar um die jeweilige Lenkachse drehbar angeordnet sind.

Gegebenenfalls ist vorgesehen, dass pro Radbaugruppe zwei Räder vorgesehen sind.

Gegebenenfalls ist vorgesehen dass der Lenkantrieb durch einen Drehantrieb der Lenkachse ausgebildet ist; oder dass der Lenkantrieb durch einen Drehzahlunterschied zweier beabstandeter und um ihre jeweilige Radachse angetriebener Räder einer Radbaugruppe angetrieben, gebildet oder unterstützt ist; oder dass der Lenkantrieb durch einen Drehantrieb der Lenkachse und durch einen Drehzahlunterschied zweier beabstandeter und um ihre jeweilige Radachse angetriebener Räder (4) einer Radbaugruppe gebildet ist.

Gegebenenfalls ist vorgesehen, dass die Radbaugruppen und/oder die Räder über eine Kinematikanordnung, die insbesondere als Fahrwerk ausgestaltet ist, mit dem Maschinengestell verbunden sind, wobei die Kinematikanordnung zur Dämpfung und/oder Federung von Unebenheiten des Untergrundes elastische und/oder dämpfende Elemente wie beispielsweise eine Feder-Dämpfer-Anordnung und eine Radaufhängung umfasst.

Gegebenenfalls ist vorgesehen, dass über die Kinematikanordnung eine Relativbewegung des Maschinengestells gegenüber dem Untergrund, den Rädern und/oder den Radbaugruppen ermöglicht ist, wobei die Relativbewegung insbesondere in oder entlang der Richtung der Hauptdrehachse ermöglicht ist.

Gegebenenfalls ist vorgesehen, dass eine Bewegungsvorrichtung vorgesehen ist, über die die Steuerkanzel mit dem Maschinengestell verbunden ist, wobei durch die Bewegungsvorrichtung eine aktive Drehung der Steuerkanzel gegenüber dem Maschinengestell um die Hauptdrehachse ermöglicht ist.

Gegebenenfalls ist vorgesehen, dass über die Bewegungsvorrichtung eine Neigung der Steuerkanzel gegenüber dem Maschinengestell um die Nickachse und/oder die Rollachse ermöglicht ist.

Gegebenenfalls ist vorgesehen, dass über die Bewegungsvorrichtung eine translatorische Bewegung der Steuerkanzel gegenüber dem Maschinengestell ermöglicht ist, wobei insbesondere eine translatorische Bewegung in oder entlang der Hauptdrehachse, eine Parallelverschiebung der Steuerkanzel gegenüber dem Maschinengestell und/oder eine Hubbewegung der Steuerkanzel gegenüber dem Maschinengestell ermöglicht ist.

Gegebenenfalls ist vorgesehen, dass eine kardanische Aufhängung vorgesehen ist, über die die Steuerkanzel gegenüber dem Maschinengestell geneigt werden kann, wobei bevorzugt zwei Trägerelemente vorgesehen sind, wobei das erste Trägerelement um eine erste Drehachse neigbar mit dem Maschinengestell verbunden ist, wobei das zweite Trägerelement um eine zweite Drehachse neigbar mit dem ersten Trägerelement verbunden ist und wobei die erste Drehachse und die zweite Drehachse im Wesentlichen orthogonal zueinander verlaufen.

Gegebenenfalls ist vorgesehen, dass eine Parallelkinematikanordnung vorgesehen ist, über die die Steuerkanzel gegenüber dem Maschinengestell geneigt werden kann, wobei die Parallelkinematikanordnung bevorzugt als Dreibein, als hydraulisches Dreibein, als pneumatisches Dreibein, als elektrisch angetriebenes Dreibein, als Sechsbein, als hydraulisches Sechsbein, als pneumatisches Sechsbein oder als elektrisch angetriebenes Sechsbein ausgebildet ist.

Gegebenenfalls ist vorgesehen, dass eine Führungsvorrichtung vorgesehen ist, die einerseits mit der Steuerkanzel und andererseits mit dem Maschinengestell oder einem Teil der Bewegungsvorrichtung gekoppelt ist, wobei die Führungsvorrichtung derart ausgestaltet ist, dass eine Drehung der Steuerkanzel gegenüber dem Maschinengestell um die Hauptdrehachse, eine Neigung der Steuerkanzel gegenüber dem Maschinengestell um die Nickachse und/oder die Rollachse, und gegebenenfalls eine translatorische Hubbewegung der Steuerkanzel gegenüber dem Maschinengestell ermöglicht sind
wobei alle anderen Freiheitsgrade der Steuerkanzel gegenüber dem Maschinengestell durch die Führungsvorrichtung im Wesentlichen gesperrt sind.

Gegebenenfalls ist vorgesehen, dass ein Drehträger vorgesehen ist, der über ein Drehträgerlager und einen Drehträgeranatrieb gegenüber dem Maschinengestell drehbar angeordnet ist und dass an dem Drehträger die Parallelkinematikanordnung, die kardanische Aufhängung und/oder die Führungsvorrichtung angreifen oder vorgesehen sind.

Gegebenenfalls ist vorgesehen, dass der Fahrsimulator als autark verfahrbarer und von einer Person aus der Steuerkanzel steuerbarer Fahrsimulator ausgebildet ist,
wobei mitfahrend mit dem Maschinengestell verbunden und über die Radbaugruppen am Untergrund abgestützt, zumindest ein Radantrieb zum Verfahren des Fahrsimulators, ein Lenkantrieb zur Lenkung des Fahrsimulators,
eine Bewegungsvorrichtung zur Relativbewegung der Steuerkanzel gegenüber dem Maschinengestell und ein Energiespeicher zur Bereitstellung der Energie für die Antriebe des Radantriebs, des Lenkantriebs und der Bewegungsvorrichtung vorgesehen sind.

Gegebenenfalls ist vorgesehen, dass eine Außenhülle vorgesehen ist, die mit der Steuerkanzel, dem Drehträger oder dem Maschinengestell starr verbunden ist und dass die Außenhülle als Hohlkörper ausgeführt ist, der die Steuerkanzel, das Cockpit und/oder den Sitz zur Aufnahme der Person zumindest teilweise, bevorzugt vollständig umgibt.

Gegebenenfalls ist vorgesehen, dass an der Außenhülle eine Bildwiedergabefläche vorgesehen ist, die sich bevorzugt über zumindest einen Großteil des Gesichtsfeldes der Person erstreckt und bevorzugt der Innenseite der Außenhülle folgend ausgebildet ist.

Gegebenenfalls betrifft die Erfindung ein Verfahren zur Simulation eines Übergangs von einem unbeschleunigten Zustand in einen beschleunigten Zustand umfassend folgende Schritte: Antreiben und Abrollen der Räder der Radbaugruppen auf dem Untergrund, wobei die Raddrehachsen aller Räder die Hauptdrehachse schneiden, sodass das Maschinengestell in eine erste Drehrichtung mit einer ersten Winkelgeschwindigkeit um die Hauptdrehachse rotiert, gleichzeitiges Drehen der Steuerkanzel um die Hauptdrehachse in eine zweite Drehrichtung mit einer zweiten Winkelgeschwindigkeit, wobei die zweite Drehrichtung der ersten Drehrichtung entgegengesetzt ist, und die zweite Winkelgeschwindigkeit der ersten Winkelgeschwindigkeit entgegengesetzt ist, sodass die Steuerkanzel gegenüber dem Untergrund im Wesentlichen still steht und unbeschleunigt ist, Verdrehung der angetriebenen und abrollenden Räder um die Lenkachse, sodass zumindest eine Raddrehachse, bevorzugt mehrere Raddrehachsen einen Abstand zur Hauptdrehachse der Steuerkanzel aufweisen, sodass die Steuerkanzel zumindest translatorisch bewegt wird und eine Beschleunigung erfährt.

Der Fahrsimulator umfasst ein Maschinengestell, zumindest drei, bevorzugt vier, fünf, sechs, sieben, acht oder mehr Radbaugruppen, die mit dem Maschinengestell gekoppelt sind und eine Verfahrbarkeit des Maschinengestells ermöglichen. Die Radbaugruppen umfassen jeweils zumindest ein Rad, bevorzugt zwei Räder. Dieses Rad bzw. diese Räder rollen auf einem beliebigen geeigneten Untergrund ab. Zumindest ein Rad ist durch einen Radantrieb um eine Radachse antreibbar. Dies ermöglicht ein Verfahren des Simulators. Bevorzugt sind mehrere Räder durch einen Radantrieb oder durch jeweils einen Radantrieb angetrieben. Dabei können pro Radbaugruppe beispielsweise zwei Räder vorgesehen sein, die beide angetrieben sind. Ferner können auch die Räder mehrerer oder aller Radbaugruppen angetrieben sein.

Die Radbaugruppen sind jeweils um eine Lenkachse drehbar angeordnet. Die Lenkachse ermöglicht die Anpassung der Richtung, in die das jeweilige Rad rollen soll. Bevorzugt ist pro Radbaugruppe eine Lenkachse vorgesehen, um die das Rad oder die Räder der jeweiligen Radbaugruppe drehbar sind. Diese Lenkachse kann als aktiv gedrehter Lenker ausgeführt sein, deren Drehung durch einen Drehantrieb angetrieben ist. Alternativ oder zusätzlich kann die Verdrehung der Radbaugruppe um die Lenkachse auch dadurch erfolgen, dass zwei Räder einer Radbaugruppe eine unterschiedliche Drehzahl aufweisen oder mit unterschiedlicher Drehzahl angetrieben sind. Dadurch wirkt ein Moment auf den Lenker und/oder um die Lenkachse, wodurch die Radbaugruppe verdreht wird.

Beispielsweise können zwei Räder einer Radbaugruppe jeweils durch einen Radnabenmotor angetrieben sein, die getrennt angesteuert werden können. Um ein Geradeausfahren der beiden Räder der Radbaugruppe zu bewirken, ist die Drehzahl beider Räder im Wesentlichen gleich. Um eine Verdrehung der Radbaugruppe um die Lenkachse zu bewirken, weicht die Drehzahl eines Rades einer Radbaugruppe von dem weiteren Rad der selben Radbaugruppe ab, wodurch die Räder der Radbaugruppe um die Lenkachse verdreht werden.

Gegebenenfalls können in allen Ausführungsformen Räder vorgesehen sein, die um eine Lenkachse drehbar angeordnet sind, jedoch nicht aktiv gelenkt sind, sondern lediglich passiv der Fahrtrichtung des Simulators folgen. In dieser Ausführungsform kann es vorteilhaft sein, dass die Räder einen gewissen Nachlauf aufweisen, um die passive Lenkbarkeit der Räder zu verbessern.

Ferner können in allen Ausführungsformen Räder vorgesehen sein, die nicht angetrieben sind und im Wesentlichen der Lastabtragung bzw. der besseren Verteilung der Last dienen.

Die Räder und/oder die Radbaugruppen sind über eine Kinematikanordnung mit dem Maschinengestell gekoppelt. Diese Kinematikanordnung erlaubt eine Relativbewegung der Räder und/oder der Radbaugruppen gegenüber dem Maschinengestell. Beispielsweise umfasst die Kinematikanordnung eine Kombination einer Radaufhängung mit einem Feder-DämpferElement. Diese Kinematikanordnung entspricht einem Fahrwerk im technischen Sinne. Durch die Kinematikanordnung können beispielsweise Bodenunebenheiten des Untergrunds abgefedert und gedämpft werden. Dies trägt zur Entkoppelung der Steuerkanzel vom Untergrund bei. Die Radaufhängung kann z.B. als Doppelquerlenkerachse, Kurbellenkerachse, Längslenkerachse, MacPherson-Federbein-Achse, Pendelachse, Raumlenker-/Mehrlenker-Achse, Schräglenkerachse, Schwinge etc. ausgebildet sein.

Gegebenenfalls können elastische Lager verwendet werden, um elastokinematische Fahrwerkseffekte nützen zu können.

Ferner ist durch die Koppelung des Maschinengestells mit zumindest einem Rad über eine Kinematikanordnung zumindest ein Freiheitsgrad gegeben, der eine Relativbewegung des Maschinengestells gegenüber dem Rad und damit gegenüber dem Untergrund ermöglicht. Die Kinematikanordnung kann somit nicht nur zur Eliminierung von Störeinflüssen des Untergrunds verwendet werden, sondern beispielsweise auch zur Neigung des Maschinengestells oder für eine Hubbewegung des Maschinengestells eingesetzt werden.

So können die durch die Elastizität der Kinematikanordnung ermöglichten Bewegungen des Maschinengestells gegenüber dem Untergrund dazu verwendet werden, einen Teil oder die gesamte Bewegung darzustellen, die simuliert werden soll. Beispielsweise treten bei Beschleunigungsänderungen des Simulators durch die Kinematikanordnung Nick- oder Wankbewegungen auf. Diese können durch die Bewegungsvorrichtung kompensiert werden. Wirken diese Bewegungen der Kinematikanordnung jedoch zumindest teilweise in dieselbe Richtung wie die zu simulierende Nick- oder Wankbewegung, so kann die Bewegung der Steuerkanzel gegenüber dem Maschinengestell durch die Bewegungsvorrichtung um diesen Anteil geringer sein.

Ferner können auch Hubbewegungen zumindest teilweise durch die Kinematikanordnung ausgeführt werden.

Gegebenenfalls sind zwei Räder einer Radbaugruppe gelenkig mit der Radaufhängung, dem Fahrwerk, dem Lenker oder der Kinematikanordnung verbunden, wobei die Drehachse des Gelenks derart ausgestaltet ist, sodass die Radlasten gleichmäßig auf beide Räder einer Radbaugruppe verteilt sind. So kann beispielsweise ein Träger vorgesehen sein, an dem beidseitig jeweils ein Rad gelagert ist. Mittig weist der Träger ein Drehgelenk auf, über das er mit der Radaufhängung, dem Fahrwerk, dem Lenker oder der Kinematikanordnung verbunden ist.

Ferner sind durch das Fahrwerk die Bildung einer maximalen effektiven Latschfläche in Abhängigkeit von der Fahrsituation und eine für hochdynamische Fahrmanöver günstige erhöhte Fahrdynamik ermöglicht.

Das Maschinengestell ist ferner mit einer Steuerkanzel gekoppelt, auf oder in der sich bevorzugt ein Sitz für die Bedienperson befindet. Die Steuerkanzel ist über eine Bewegungsvorrichtung mit dem Maschinengestell gekoppelt. Die Bewegungsvorrichtung kann beispielsweise als kardanische Aufhängung oder als Parallelkinematik-Vorrichtung ausgeführt sein. Insbesondere ist die Bewegungsvorrichtung dazu eingerichtet, eine Bewegung der Steuerkanzel und/oder der Person gegenüber dem Maschinengestell zu ermöglichen.

Diese Beweglichkeit kann passiv oder aktiv sein. Bei einer aktiven Bewegung werden Antriebe verwendet, die über eine geeignete Steuerung eine Bewegung der Steuerkanzel und/oder der Person gegenüber dem Maschinengestell bewirken. Beispiele für derartige Antriebe sind Parallelkinematik-Vorrichtung wie Dreibeine oder Sechsbeine, die über pneumatische, hydraulische oder elektrische Antriebe betätigt werden. Eine weitere Möglichkeit sind kardanische Aufhängungen, bei denen mehrere Trägerelemente drehbar in Serie aneinander gereiht sind. Diese Trägerelemente können über Drehantriebe oder Linearantriebe gegenüber einander verdreht werden, wodurch eine Neigung der Steuerkanzel und/oder der Person gegenüber dem Maschinengestell ermöglicht ist.

Eine passive Bewegbarkeit wird beispielsweise durch eine elastische Lagerung der Steuerkanzel am Maschinengestell erzielt. Durch Beschleunigungen, wie z.B. Richtungsänderungen des fahrenden Fahrsimulators, wirken Trägheitskräfte auf die Steuerkanzel und auf das Maschinengestell. Diese Trägheitskräfte können verwendet werden, um Nickbewegungen oder Wankbewegungen der Steuerkanzel zu bewirken. Beispielsweise kann die Steuerkanzel über ein Dreibein oder ein Sechsbein aus Feder-Dämpfer-Anordnungen mit dem Maschinengestell gekoppelt sein. Gegebenenfalls kann die Feder bzw. die Dämpfungscharakteristik der einzelnen elastischen Elemente dynamisch verändert werden. Dies kann beispielsweise durch Regelventile oder durch rheologische Flüssigkeiten mit variabler Viskosität in den Dämpfereinheiten bewirkt werden.

Ferner kann die vorliegende Erfindung derart ausgestaltet sein, dass zur Führung der Bewegung der Steuerkanzel gegenüber dem Maschinengestell eine Führungsvorrichtung vorgesehen ist. Diese Führungsvorrichtung entspricht im Wesentlichen einer Aneinanderreihung gelenkig miteinander verbundener Einzelelemente. Durch die Art der Verbindung der Einzelelemente weist die Führungsvorrichtung eine begrenzte Anzahl an Freiheitsgraden auf. So kann die Führungsvorrichtung derart ausgestaltet sein, dass Nick- und/oder Rollbewegungen der Steuerkanzel gegenüber dem Maschinengestell ermöglicht sind. Weiters kann eine Hubbewegung der Steuerkanzel gegenüber dem Maschinengestell ermöglicht sein. Die Führungsvorrichtung kann dabei auch derart ausgestaltet sein, dass seitliche translatorische Bewegungen der Steuerkanzel gegenüber dem Maschinengestell verhindert sind. Dies hat den Vorteil, dass Massenkräfte, die durch Seitenbeschleunigungskräfte oder Longitudinalbeschleunigungskräfte auf die Bewegungsvorrichtung wirken, durch die Führungsvorrichtung abgefangen werden. Wird beispielsweise der Fahrsimulator beschleunigt, so wird die Kanzel durch die Massenträgheitskraft nach hinten gezogen. Dies bewirkt an der Verbindungsstelle zwischen der Bewegungsvorrichtung und der Steuerkanzel einerseits ein Moment um eine Nickachse und andererseits eine geradlinige Trägheitskraft, die im Wesentlichen dem Beschleunigungsvektor entgegengesetzt ist. Um derartige horizontal verlaufende Beschleunigungskräfte abzufangen, kann eine seitliche oder längs verlaufende Parallelverschiebung der Steuerkanzel gegenüber dem Maschinengestell durch die Führungsvorrichtung verhindert sein.

Bevorzugt weist die Führungsvorrichtung zwei Drehfreiheitsgrade auf, die eine Neigung der Kanzel gegenüber dem Maschinengestell um eine Nickachse und/oder um eine Rollachse ermöglichen. Gegebenenfalls ist die Verbindungsstelle als Kreuzgelenk ausgeführt. Dieses Kreuzgelenk kann über einen oder mehrere Arme mit dem Maschinengestell gekoppelt sein. Dadurch ist eine Hubbewegung ermöglicht. Diese Hubbewegung weist eine Komponente auf, die im Wesentlichen parallel zu einer Gierachse oder zur Hauptdrehachse verläuft. Jedoch ist bei einer armförmigen Ausgestaltung keine exakte lineare Bewegung, sondern eine Hubbewegung entlang einer gekrümmten Bewegungsspur ermöglicht.

Bevorzugt ist die Bewegungsvorrichtung derart ausgestaltet, dass sie mit der Kanzel mitgedreht werden kann. Dazu sind die Bewegungsvorrichtung und gegebenenfalls auch die Führungsvorrichtung mit einem Drehträger gekoppelt und/oder verbunden.

Der Drehträger ist ein Bauteil, der eine Drehung, insbesondere eine unbegrenzte Drehung der Steuerkanzel gegenüber dem Maschinengestell ermöglicht. An dem Drehträger sind bevorzugt die Komponenten Bewegungsvorrichtung und/oder Führungsvorrichtung vorgesehen.

Der Drehträger kann beispielsweise korbförmig oder wannenförmig ausgeführt sein. Dadurch kann der Schwerpunkt des Simulators niedrig gehalten werden.

Ferner kann der Drehträger auch scheibenförmig, ringförmig, als Drehteller oder als Drehring ausgeführt sein.

Bevorzugt ist der Fahrsimulator derart ausgebildet, dass alle notwendigen Antriebe und Einrichtungen zur Bewegung des Simulators und zur Simulation im oder am selbstfahrenden Simulator vorgesehen sind. In einer bevorzugten Ausführungsform ist der Simulator derart ausgestaltet, dass die Energieversorgung, insbesondere Energiespeicher wie Akkus, Batterien, Treibstoff für einen Verbrennungsmotor, einen Generator und/oder eine Brennstoffzelle etc. am oder im Fahrsimulator vorgesehen sind. Die Energieversorgung kann auch mittels Batterien und gegebenenfalls zusätzlichen (kurzzeitig) wirkenden Energiespeichern wie z.B. Kondensatoren realisiert werden.

Gegebenenfalls kann aber auch eine externe Energiequelle vorgesehen sein, die z.B. als Schleifkontakt, als Schleppkabel, als berührungslose Energieübertragungseinrichtung wie insbesondere eine induktive Energieübertragungseinrichtung oder ähnliches ausgeführt sein kann.

Zur Speicherung der Energie kann ein Energiespeicher vorgesehen sein, der insbesondere als Akkumulator ausgeführt sein kann. Bevorzugt sind mehrere Energiespeichermodule vorgesehen. Diese können beispielsweise am Maschinengestell vorgesehen sein. Gegebenenfalls können diese Energiespeicher jedoch auch an der Steuerkanzel und insbesondere am Drehträger vorgesehen sein. Bevorzugt sind die Akkumulatoren so tief wie möglich angeordnet, sodass der Schwerpunkt des Fahrsimulators tief gehalten wird.

Zur Übertragung der Energie sind Leitungen vorgesehen, die sich von dem Energiespeicher bis zu den Energieverbrauchern erstrecken. Derartige Energieverbraucher sind beispielsweise Antriebe, Steuerungseinheiten, Sensoren, Bildwiedergabeflächen, Datenverarbeitungseinheiten wie beispielsweise Computer, Beleuchtungen etc.. Um Energie von dem Maschinengestell auf bewegte Komponenten wie beispielsweise auf die Steuerkanzel oder von dem Maschinengestell auf die Räder bzw. deren Antriebe zu übertragen, können gemäß einer bevorzugten Ausführungsform Schleifringe vorgesehen sein. Durch diese Schleifringe ist eine Energieübertragung auf Komponenten ermöglicht, die eine beliebige und unbegrenzte Drehbarkeit aufweisen.

Eine Schleifringübertragung kann beispielsweise zwischen der Steuerkanzel und dem Maschinengestell und zwischen den Radbaugruppen und dem Maschinengestell vorgesehen sein.

Gegebenenfalls ist auch ein Mediumstransport eines flüssigen Mediums über Drehdurchführungen von Nöten. Beispielsweise könnte ein Kühlmedium oder ein Medium eines Hydrauliksystems auf drehbar angeordnete Komponenten übertragen werden. Beispielsweise kann ein Kühlmedium an Radantriebe geleitet werden, wobei die Radantriebe an den drehbar angeordneten Radbaugruppen vorgesehen sind und die Kühlpumpe bzw. der Wärmetauscher am Maschinengestell. Ferner könnte eine gegebenenfalls unter Druck stehende Hydraulikflüssigkeit von dem Maschinengestell an den Drehträger und insbesondere an das Dreibein geleitet sein. Auch hierbei kann die Übertragung über eine Drehdurchführung geschehen.

Gegebenenfalls werden auch Daten oder Schwachstrom-Signale über Schleifringe bzw. Schleifdurchführungen übertragen. So werden Steuersignale oder Signale von Sensoren gegebenenfalls auf oder von drehbar gegenüber einander angeordneten Komponenten übertragen.

Zur Übertragung unterschiedlicher Daten- oder Energieflüsse, können konzentrisch angeordnete Drehübertragungseinrichtungen wie insbesondere Schleifring, Drehüberträger und/oder Drehdurchführungen vorgesehen sein.

Die Radantriebe können in allen Ausführungsformen, beispielsweise Radnabenmotoren sein. Gemäß einer weiteren, alternativen Ausführungsform der Radantriebe können diese in allen Ausführungsbeispielen als mit dem Maschinengestell gekoppelte Rotationsantriebe ausgeführt sein, die die Rotation über eine Welle an die Räder übertragen. Die Welle ist beispielsweise koaxial mit der Lenkachse angeordnet. Die Verteilung der Energie auf mehrere Räder einer einzigen Radbaugruppe kann über ein Differential erfolgen. Der Radantrieb kann dabei an der Radbaugruppe vorgesehen sein oder am Maschinengestell. Ist der Radantrieb am Maschinengestell angeordnet, so ist bevorzugt ein Kardangelenk vorgesehen, um die Drehenergie des Antriebs auf die gegenüber dem Maschinengestell beweglich angeordneten Räder zu übertragen.

Die Steuerkanzel des Simulators umfasst einen Sitz für eine Person. Ferner umfasst die Steuerkanzel bevorzugt Bedienelemente zur Steuerung des Fahrsimulators. Diese Bedienelemente können den Bedienelementen eines PKWs oder eines anderen Fahrzeugs nachgebildet sein. Durch Betätigung dieser Bedienelemente kann der Simulator in der realen und/oder der virtuellen, simulierten Umgebung bewegt und gesteuert werden. Die Steuerkanzel kann von einer Außenhülle umgeben sein, die gegebenenfalls geschlossen ausgeführt ist, sodass keine Außensicht der Person gegeben ist. Sinneseindrücke der Umwelt werden in dieser Ausführungsform über Bildwiedergabeflächen dargestellt. Es handelt sich bei dieser Simulation um eine Fahrsimulation in einer virtuellen computergenerierten Umgebung.

Gegebenenfalls kann jedoch auch eine Außensicht ermöglicht sein, sodass die Person die Sinneseindrücke einer realen Umgebung erhält.

In oder an der Steuerkanzel ist bevorzugt zumindest ein Teil des zu simulierenden Fahrzeugs nachgebildet. Beispielsweise kann ein nachgebildetes Cockpit eines PKWs an der Steuerkanzel vorgesehen sein, um eine realitätsnahe Simulation zu ermöglichen.

Ferner kann auch ein kompletter PKW in oder an der Steuerkanzel vorgesehen sein. Dies bringt jedoch den Nachteil erhöhter Masse und dadurch erhöhter Trägheitskräfte mit sich.

In allen Ausführungsformen der Erfindung können die Steuerkanzel und die Außenhülle unterschiedlich ausgeführt sein:
- Die Steuerkanzel kann fest mit einer Außenhülle verbunden sein. In diesem Fall ist die Außenhülle ein Teil der Steuerkanzel.
- Gemäß einer weiteren Ausführungsform kann die Außenhülle auch fest mit dem Maschinengestell verbunden sein. In dieser Ausführungsform weist die Steuerkanzel zumindest einen Freiheitsgrad gegenüber der Außenhülle auf. Die Steuerkanzel ist in diesem Fall als Träger für den Sitz oder als Träger für das Cockpit ausgebildet. Gegebenenfalls ist die Steuerkanzel das Cockpit.
- Gemäß einer weiteren Ausführungsform kann die Außenhülle fest mit dem Drehträger verbunden sein. In diesem Fall wird die Außenhülle mit dem Drehträger mitgedreht, wobei eine Neigung der Steuerkanzel gegenüber der Außenhülle um die Nick- und/oder Rollachse oder eine Hubbewegung möglich ist. Auch in diesem Fall kann die Steuerkanzel als Träger für den Sitz oder als Träger für das Cockpit ausgebildet sein oder gegebenenfalls ist die Steuerkanzel das Cockpit.
- Die Außenhülle kann geschlossen ausgeführt sein um eine Außensicht zu verhindern.
- Die Außenhülle kann Öffnungen aufweisen, um eine Durchsicht zu ermögliche.
- Gegebenenfalls kann die Außenhülle auch entfallen, womit eine freie Außensicht gegeben ist.
- Gegebenenfalls kann die Außenhülle derart ausgebildet sein, dass sie selbsttragend ist.
- Gegebenenfalls ist die Außenhülle derart ausgebildet, dass weitere Komponenten wie beispielsweise Projektoren für die Bildwiedergabefläche, das Cockpit, oder weitere Komponenten wie beispielsweise Tonwiedergabegeräte, Datenverarbeitungseinrichtungen wie insbesondere Computer etc. an der Außenhülle befestigt sein können, bzw. dass die Außenhülle dazu eingerichtet ist, diese Komponenten auch unter erhöhter Beschleunigung zu tragen.

In weiterer Folge werden einige Begriffe zur Verbesserung der Klarheit definiert:
Die dem Fachmann bekannten Achsen der Fahrzeug- bzw. der Fahrwerksentwicklung werden wie folgt definiert:
Die Nickachse entspricht einer bezüglich der Blickrichtung der Bedienperson bei geradeaus gerichtetem Blick und/oder bezüglich der Längsachse des simulierten Fahrzeugs querverlaufenden Achse. Eine Nickbewegung eines realen oder simulierten Fahrzeuges um die Nickachse wird beispielsweise durch eine geradlinige Beschleunigung oder eine Verzögerung bewirkt.

Die Rollachse verläuft im Wesentlichen in Längsrichtung des simulierten Fahrzeugs und somit im Wesentlichen parallel zur Blickrichtung der Bedienperson bei geradeaus gerichtetem Blick. Eine Neigung des Fahrzeugs um die Rollachse geschieht beispielsweise bei Kurvenfahrten, wenn die äußere Radaufhängung nachgibt. Dem Fachmann ist diese Bewegung auch als Wanken bekannt.

Die Gierachse entspricht im Wesentlichen der Hochachse des simulierten Fahrzeugs oder der Person. Eine Drehung um die Gierachse geschieht beispielsweise bei Kurvenfahrten.

Diese Achsen sind nicht zwingend starr gegenüber dem Fahrsimulator, dem simulierten Fahrzeug, der Steuerkanzel oder der Bedienperson festgelegt, da sich die Lage der Achsen durch dynamische Relativbewegungen einzelner Komponenten verändern kann.

Bei dem erfindungsgemäßen Simulator sind diese Achsen als feste Achsen bezüglich der Person bzw. des Cockpits oder der Steuerkanzel definiert. Ist die Steuerkanzel im Wesentlichen fest mit der Außenhülle verbunden, so gelten die Definitionen der Achsen auch für die Au ßenhülle.

Nickbewegungen, Rollbewegungen und Gierbewegungen der Person können durch die erfindungsgemäße Vorrichtung im Rahmen der kinematischen Möglichkeiten frei simuliert werden.

Die Erfindung wird nun anhand der Figuren weiter beschrieben.
Fig. 1 zeigt eine schematische Schrägansicht einer Ausführungsform des erfindungsgemäßen Fahrsimulators.
Fig. 2 zeigt eine Schnittdarstellung eines erfindungsgemäßen Fahrsimulators.
Fig. 3 zeigt ein Detail der Bewegungsvorrichtung in einer Schrägansicht.
Die Fig. 4a und 4b zeigen Details der Bewegungsvorrichtung und insbesondere des Drehträgers.
Fig. 5 zeigt eine exemplarische Ausführung einer Kinematikanordnung.
Fig. 6 zeigt eine weitere Ausführungsform einer erfindungsgemäßen Bewegungsvorrichtung.
Fig. 7 zeigt vier Ansichten von Komponenten zur Verbesserung der Transportierbarkeit
Fig.8 und Fig. 9 zeigen Details der Energieversorgung der Vorrichtung.

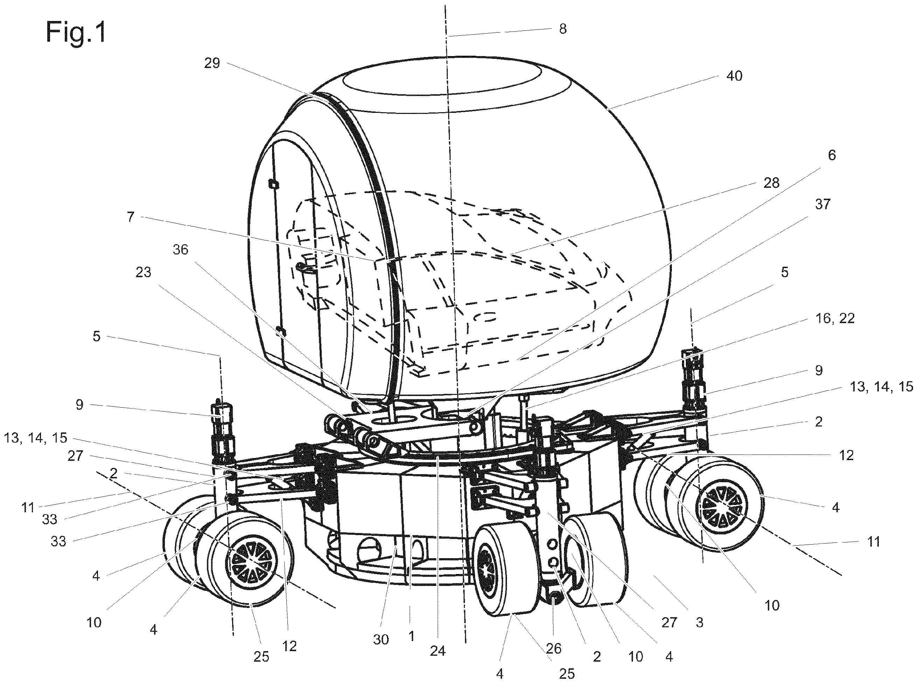

Fig. 1 zeigt eine Ausführungsform eines erfindungsgemäßen Simulators mit einem Maschinengestell 1, vier Radbaugruppen 2, einer Steuerkanzel 6, die über eine Bewegungsvorrichtung 16 mit dem Maschinengestell 1 verbunden oder gekoppelt ist. Die Radbaugruppen 2 umfassen in der vorliegenden Ausführungsform jeweils zwei Räder 4. Diese Räder können gegebenenfalls um ihre Radachse 11 angetrieben sein. Die Räder zumindest einer Radbaugruppe sind angetrieben. Bevorzugt sind die Räder von zwei, drei oder mehr Radbaugruppen angetrieben. Erfindungsgemäß können, bei Ausführungsformen, bei denen zwei Räder 4 pro Radbaugruppe 2 vorgesehen sind, beide Räder 4 gemeinsam durch einen Radantrieb 10 oder getrennt voneinander durch unabhängige Radantriebe 10 angetrieben sein.

Die Räder einer Radbaugruppe 2 können über einen Lenkantrieb 9 um die Lenkachse 5 geschwenkt oder gedreht werden. Diese Schwenk- oder Drehbarkeit ist bevorzugt in beide Richtungen unbegrenzt. Durch diese Bewegung um die Lenkachse 5 ist die Fahrtrichtung der einzelnen Radbaugruppen wählbar und steuerbar. Der Lenkantrieb 9 kann wie in der vorliegenden Ausführung als Rotationsantrieb ausgeführt sein, durch den die Stellung der Räder 4 und eines Lenkers 27 verändert werden kann.

Gemäß einer weiteren nicht dargestellten Ausführungsform kann die Drehung der Räder 4 um die Lenkachse 5 auch durch Steuerung von Drehzahlunterschieden zwischen den beiden an einer Radbaugruppe 2 vorgesehenen Rädern 4 erzielt werden. Beispielsweise ist jedes der beiden Räder einer Radbaugruppe 2 durch einen Radantrieb angetrieben. Bevorzugt kommen Radnabenmotoren zum Einsatz. Durch Drehzahlunterschiede der beiden Räder einer Radbaugruppe kommt es zu unterschiedlichen Fahrwegen und dadurch zu einem Lenkmoment der beiden Räder um die Lenkachse 5. Bei einer derartigen Ausführungsform kann ein aktiver Lenkantrieb als eigener Antrieb entfallen oder durch die Radantriebe unterstützt sein.

Die Radbaugruppen und/oder die Räder 4 sind über eine Kinematikanordnung 12 mit dem Maschinengestell 1 gekoppelt. Diese Kinematikanordnung umfasst bevorzugt elastische und dämpfende Elemente 13, insbesondere eine Feder-Dämpfer-Anordnung 14 sowie eine Radaufhängung 15. Ferner kann die Kinematikanordnung einen Radträger 26 umfassen, der schwenkbar am Lenker 27 vorgesehen ist, um eine gleichmäßige Verteilung der auf die Radbaugruppe 2 wirkenden Kräfte auf beide Räder 4 zu bewirken.

Der Radträger 26 ist dabei um eine Drehachse schwenkbar am Lenker 27 vorgesehen. Die Drehachse des Radträgers 26 zum Lenker 27 verläuft beispielsweise horizontal oder leicht von der horizontalen Richtung abweichend.

Ferner umfasst der erfindungsgemäße Simulator eine Steuerkanzel 6. An dieser Steuerkanzel 6 ist schematisch eingezeichnet ein Cockpit 28 des zu simulierenden Fahrzeugs vorgesehen. Dieses Cockpit 28 ist beispielsweise der vordere Teil eines PKW, ein Nachbau eines vorderen Teils eines PKW, ein Nachbau eines gesamten PKW, eine Führerstand eines beliebigen Fahrzeugs, ein Nachbau eine Führerstands eines beliebigen Fahrzeugs und umfasst insbesondere einen Sitz und Bedienelemente wie beispielsweise ein Lenkrad, ein Gaspedal und eine Bremse.

Dieses Cockpit 28 ist bevorzugt starr an der Steuerkanzel 6 festlegbar. Jedoch kann zur Auswechslung des Cockpits 28 eine verschließbare Öffnung 29 in der Außenhülle 40 vorgesehen sein, durch die unterschiedliche Cockpits auf die Steuerkanzel und in die Außenhülle eingebracht oder entfernt werden können. Ferner kann die Öffnung auch durch eine Tür verschlossen werden, um das Ein- und Aussteigen einer Bedienperson zu ermöglichen.

Die Außenhülle 40 ist in der vorliegenden Ausführungsform im Wesentlichen als geschlossener Hohlkörper ausgebildet, der eine verschließbare Öffnung aufweist. Durch diese Ausgestaltung ist die Bedienperson im Wesentlichen von der Außenwelt abgeschnitten. Optische oder akustische Eindrücke können über künstlich erzeugte Bilder oder Geräusche simuliert werden. Bevorzugt ist in der Außenhülle 40 eine Bildwiedergabefläche vorgesehen, über die eine virtuelle Umgebung dargestellt werden kann. Diese Wiedergabefläche kann beispielsweise als Flachbildschirmfläche oder als Projektionsfläche ausgeführt sein. Bei der Ausführung als Projektionsfläche können in an der Steuerkanzel 6 oder in der Außenhülle ein oder mehrere Videoprojektor(en) vorgesehen sein.

Gegebenenfalls weist die Außenhülle Öffnungen auf, die eine reale Außensicht ermöglichen. Dadurch kann eine Bewegung in der realen Umgebung simuliert werden.

Bevorzugt umfasst der erfindungsgemäße Simulator einen oder mehrere Energiespeicher 30. Diese können beispielsweise als Treibstofftanks, Batterien oder als Akkumulatoren ausgebildet sein. Die Energiespeicher 30 dient zum Antrieb der unterschiedlichen Antriebe zur Bewegung des Simulators, sowie zur Versorgung sonstiger Verbraucher wie z.B. Bildwiedergabegeräte, Steuerungen, Datenverarbeitungsgeräte etc. Gegebenenfalls kann für die Energiespeichermodule eine Schnellwechsel-Einrichtung mit externer Ladestation vorgesehen sein. um einen Quasi-Dauerbetrieb zu ermöglichen.

Ferner können bei Bremsvorgängen Antriebe als Generatoren wirken, um zumindest Teile der Bremsenergie rückzugewinnen und/oder in elektrische Energie umzuwandeln. Diese elektrische Energie kann dann z.B. in den Batterien, Akkus oder den kurzzeitigen Energiespeichern gespeichert werden. Dies erhöht einerseits den Wirkungsgrad und die Reichweite des Simulators, andererseits ist dadurch die dynamische Radkinematik verbessert, da zu jedem Zeitpunkt ausreichend Energie zum hochdynamischen Antrieb der Räder zur Verfügung steht.

Gegebenenfalls kann der Simulator auch von einer externen Energiequelle gespeist sein. Dazu bieten sich beispielsweise ein Schleppkabel oder Schleifkontakte an.

Die dargestellte Ausführungsform weist eine Bewegungsvorrichtung 16 auf, die eine Parallelkinematikanordnung 22 umfasst. Diese Parallelkinematikanordnung 22 ist in der vorliegenden Ausführungsform als Dreibein oder sogenannter Tripod ausgeführt. Ferner umfasst der erfindungsgemäße Simulator eine Führungsvorrichtung 23. Diese Führungsvorrichtung 23 dient insbesondere der Führung der Bewegung der Steuerkanzel 6 gegenüber dem Maschinengestell 1 oder gegenüber dem Drehträger 24. In der vorliegenden Ausführungsform sind durch die Führungsvorrichtung 23 einige Freiheitsgrade gesperrt. Zur Drehung der Steuerkanzel 6 gegenüber dem Maschinengestell 1 ist ein Drehträger 24 vorgesehen. Dieser Drehträger 24 umfasst zumindest einen Drehträgerantrieb 31 sowie ein Drehträgerlager 32.

Bevorzugt ermöglicht der Drehträger 24 eine Drehung der Steuerkanzel 6 gegenüber dem Maschinengestell von 360°, besonders bevorzugt ist eine beliebige, eine kontinuierliche und/oder eine unbegrenzte Drehbarkeit der Steuerkanzel 6 gegenüber dem Maschinengestell 1, insbesondere in beide Drehrichtungen, ermöglicht.

Bevorzugt gilt Gleiches für die Drehbarkeit der Räder 4 der Radbaugruppen 2 um die jeweilige Lenkachse. Auch diese können gemäß einer bevorzugten Ausführungsform über 360°, beliebig, kontinuierlich und/oder unbegrenzt, insbesondere in beide Drehrichtungen, um die Lenkachse gedreht werden.

Diese spezielle Konfiguration der unendlich drehbaren Elemente ermöglicht, dass das Maschinengestell 1 um eine Hauptdrehachse 8 rotieren kann, wobei gleichzeitig die Steuerkanzel 6 in Ruhe bleibt bzw. ortsfest positioniert ist. Dies bringt Vorteile bei der Lösung der erfindungsgemäßen Aufgabe, insbesondere bei der Verbesserung der dynamischen Radkinematik, die auch umfasst, dass die Räder in jeder Stellung bzw. in jeder Fahrsituation des Simulators beschleunigbar sind und einander nicht z.B. durch eine kinematische Singularität sperren .

Die Drehung der Steuerkanzel 6 gegenüber dem Maschinengestell 1 erfolgt bevorzugt um die Hauptdrehachse 8. Die Hauptdrehachse 8 ist in bevorzugter Weise ein Normalvektor einer Ebene, die durch die Radaufstandsflächen 25 am Untergrund 3 aufgespannt wird. Diese Ebene entspricht somit im Wesentlichen dem Untergrund 3. Die Hauptdrehachse 8 verläuft dadurch bei waagrechtem Untergrund im Wesentlichen senkrecht.

Auch die Lenkachsen 5 verlaufen gemäß einer bevorzugten Ausführungsform bei waagrechtem Untergrund im Wesentlichen senkrecht und bevorzugt parallel zur Hauptdrehachse.

Die Radachsen 11 der Räder 4 verlaufen bevorzugt im Wesentlichen waagrecht. Es entspricht jedoch ebenfalls dem Erfindungsgedanken, dass die Achsen von der horizontalen oder der vertikalen Richtung abweichen. Insbesondere können die Lenkachsen 5 leicht geneigt sein, um z.B. einen Nachlauf zu bewirken. Auch die Radachsen 11 können leicht zueinander geneigt sein, um z.B. einen Radsturz zu bewirken.

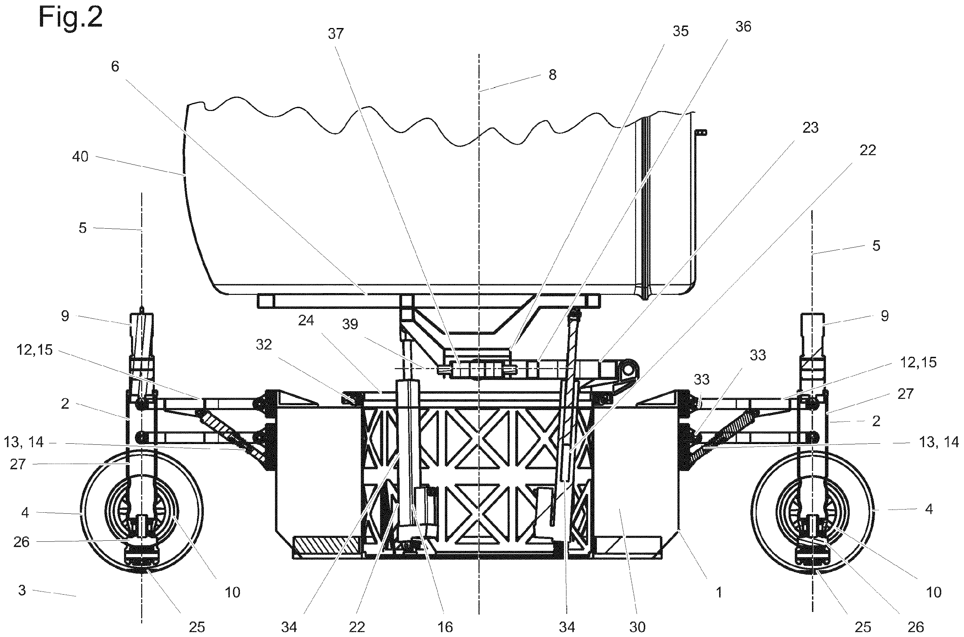

Fig. 2 zeigt eine schematische Schnittdarstellung einer erfindungsgemäßen Vorrichtung, die im Wesentlichen der Vorrichtung aus Fig. 1 entspricht. Der selbstfahrende Fahrsimulator umfasst eine Steuerkanzel 6, die über eine Bewegungsvorrichtung 16 mit einem Maschinengestell 1 gekoppelt ist. Das Maschinengestell 1 ist über Radbaugruppen 2 am Untergrund verfahrbar und abgestützt. Die Radbaugruppen 2 umfassen bevorzugt jeweils zumindest ein Rad 4, das über eine Radaufstandsfläche 25 am Untergrund 3 aufliegt. Zumindest ein Rad 4 ist über einen Radantrieb 10 angetrieben, sodass der Simulator durch dieses Antriebsrad bewegt werden kann. Ferner ist das Rad 4 der Radbaugruppe 2 mit einem Lenker 27 gekoppelt, der bevorzugt um eine Lenkachse 5 drehbar ist. Zur Drehung des Lenkers 27 um die Lenkachse 5 ist ein Lenkantrieb 9 vorgesehen. Dieser Lenkantrieb kann, wie in der vorherigen Ausführungsform beschrieben, als eigener Rotationsantrieb ausgeführt sein oder bei mehreren Rädern 4 pro Radbaugruppe auch durch Drehzahlunterschiede der einzelnen Räder ausgebildet sein.

Bei mehreren Rädern 4 pro Radbaugruppe 2 können die Räder 4 über einen Radträger 26 mit dem Maschinengestell gekoppelt sein. Dieser Radträger ist beispielsweise schwenkbar gegenüber dem Lenker 27 ausgeführt, um eine gleichmäßige Lastabtragung der Räder zu bewirken. Die Räder 4 sind über eine Kinematikanordnung 12 mit dem Maschinengestell gekoppelt. Diese Kinematikanordnung 12 umfasst bevorzugt elastische und/oder dämpfende Elemente 13, die insbesondere als Feder-Dämpfer-Anordnung 14 ausgebildet sind sowie eine Radaufhängung 15. In der vorliegenden Ausführungsform ist die Radaufhängung 15 als Doppelquerlenkerradaufhängung ausgebildet. Die Radaufhängung dient der Bewegbarkeit der Räder gegenüber dem Maschinengestell 1. Zur Begrenzung der Bewegbarkeit ist eine Feder-Dämpfer-Anordnung 14 vorgesehen. In der vorliegenden Ausführungsform ist die Federdämpferanordnung 14 als Pullrod-Konfiguration ausgebildet. Jedoch sind auch Pushrod-Ausführungen oder alternative Konfigurationen möglich.

Die Kinematikanordnung 12 umfasst mehrere Lager 33. Diese Lager können gegebenenfalls teilweise als elastische Lager ausgeführt sein. Dadurch erhält das Fahrwerk elastokinematische Eigenschaften.

In der vorliegenden Ausführungsform verlaufen die beiden Querlenker im Wesentlichen parallel. Es sind jedoch auch andere Konfigurationen möglich. Beispielsweise können die Querlenker winkelig zueinander gestellt sein.

In der vorliegenden Ausführungsform verlaufen beide Querlenker im Wesentlichen horizontal. Gemäß einer weiteren Ausführungsform kann einer oder können beide Querlenker auch schräggestellt sein.

Die Steuerkanzel 6 ist über eine Bewegungsvorrichtung 16 mit dem Maschinengestell 1 gekoppelt. Die Bewegungsvorrichtung 16 umfasst in der vorliegenden Ausführungsform eine Parallelkinematikanordnung 22 und einen Drehträger 24. Der Drehträger 24 ist in der vorliegenden Form korbförmig ausgeführt und erstreckt sich vom oberen Bereich des Maschinengestells 1 bis zu einem tiefer liegenden Bereich des Maschinengestells. Der Drehträger ist im Wesentlichen wannenförmig ausgeführt. Am Wannenboden, der in der vorliegenden Ausführungsform tiefer liegt als der Wannenkragen, ist die Parallelkinematikanordnung 22 angebracht. Diese Konfiguration bietet Vorteile bei der Lösung der erfindungsgemäßen Aufgabe, insbesondere durch eine tiefere Lage des Schwerpunkts.

Der Drehträger 24 ist am Maschinengestell 1 über ein Drehträgerlager 32 drehbar gelagert und über einen Drehträgerantrieb 31 (nicht dargestellt) antreibbar. Die Parallelkinematikanordnung 22 umfasst mehrere Linearantriebe 34, die mit der Steuerkanzel 6 gekoppelt sind. Durch unterschiedliche Längenänderung der einzelnen Linearantriebe 34 kann die Steuerkanzel 6 geneigt bzw. bewegt werden. Durch gleichzeitiges Ein- oder Ausfahren kann eine Senkbewegung oder eine Hubbewegung der Steuerkanzel gegenüber dem Maschinengestell und in weiterer Folge gegebenenfalls gegenüber dem Untergrund 3 erzielt werden. Die Steuerkanzel 6 umfasst insbesondere einen Steuerkanzelträger 35, der einerseits fest mit der Außenhülle der Steuerkanzel verbunden ist und an dem andererseits die Bewegungsvorrichtung angreift. Gegebenenfalls kann dieser Steuerkanzelträger 35 jedoch entfallen, insbesondere, wenn die Steuerkanzel als selbsttragende Steuerkanzel ausgeführt ist oder wenn die Steuerkanzel und der Steuerkanzelträger als selbsttragendes Cockpit ausgeführt sind.

Ferner umfasst der erfindungsgemäße Simulator eine Führungsvorrichtung 23. Diese Führungsvorrichtung 23 ist einerseits am Drehträger 24 und andererseits an der Steuerkanzel 6 festgelegt. Die Führungsvorrichtung 23 umfasst gelenkig miteinander verbundene Einzelelemente, die eine gewisse Beweglichkeit bzw. bestimmte Freiheitsgrade aufweisen. In der vorliegenden Ausführungsform umfasst die Führungsvorrichtung 23 einen Hauptarm 36 sowie ein Kreuzgelenk 37. Der Hauptarm 36 ist gelenkig mit dem Drehträger 24 verbunden. Die Drehachse dieses Gelenks verläuft im Wesentlichen in einer waagrechten Ebene. Der dargestellte Hauptarm weist gegenüber dem Drehträger 24 lediglich einen Drehfreiheitsgrad auf.

Der Hauptarm 36 kann aber gegebenenfalls auch als Doppelgelenksarm ausgeführt sein, bei dem zwei Hauptarme ähnlich einem Kniegelenk miteinander verbunden sind.

Am freien Ende des Hauptarms 36, an dem dieser nicht mit dem Drehträger 24 verbunden ist, greift der Hauptarm an einem Kreuzgelenk 37 an. Dieses Kreuzgelenk 37 ist um eine erste Kreuzgelenkachse 38 schwenkbar mit dem Hauptarm 36 verbunden. Ferner weist das Kreuzgelenk 37 eine zweite Kreuzgelenksachse 39 auf, um die das Kreuzgelenk 37 schwenkbar mit der Steuerkanzel 6 verbunden ist. Dadurch ist die Steuerkanzel im Wesentlichen um die erste Kreuzgelenksachse 38 und die zweite Kreuzgelenksachse 39 schwenkbar bzw. neigbar gegenüber dem Maschinengestell 1. Bevorzugt entsprechen die erste Kreuzgelenkachse 38 und die zweite Kreuzgelenksachse 39 im Wesentlichen der Nickachse und der Rollachse der Person in der Steuerkanzel 6. Ferner lässt die kinematische Ausgestaltung der Führungsvorrichtung 23 eine Hubbewegung der Steuerkanzel gegenüber dem Maschinengestell 1 zu. Diese Hubbewegung verläuft in der vorliegenden Ausführungsform entlang einer Kurvenbahn, die insbesondere von der Armlänge des Hauptarms 36 bestimmt ist. Bei einer Ausführung des Hauptarms als Doppelgelenksarm kann jedoch auch eine geradlinige Hubbewegung, insbesondere entlang der Hauptdrehachse 8 erfolgen.

Weitere Freiheitsgrade zur Bewegung der Steuerkanzel gegenüber dem Maschinengestell 1 sind durch die Führungsvorrichtung 23 im Wesentlichen gesperrt. Dies hat den positiven Effekt, dass waagrecht wirkende Massenträgheitskräfte, wie sie insbesondere bei der Beschleunigung oder Verzögerung des Simulators auf die Bewegungsvorrichtung wirken, von der Führungsvorrichtung abgefangen werden. Dadurch kann die Dimensionierung der Bewegungsvorrichtung optimiert werden. Dies hat einen positiven Effekt auf das Gesamtgewicht des Simulators und hilft somit bei der Lösung der erfindungsgemäßen Aufgabe.

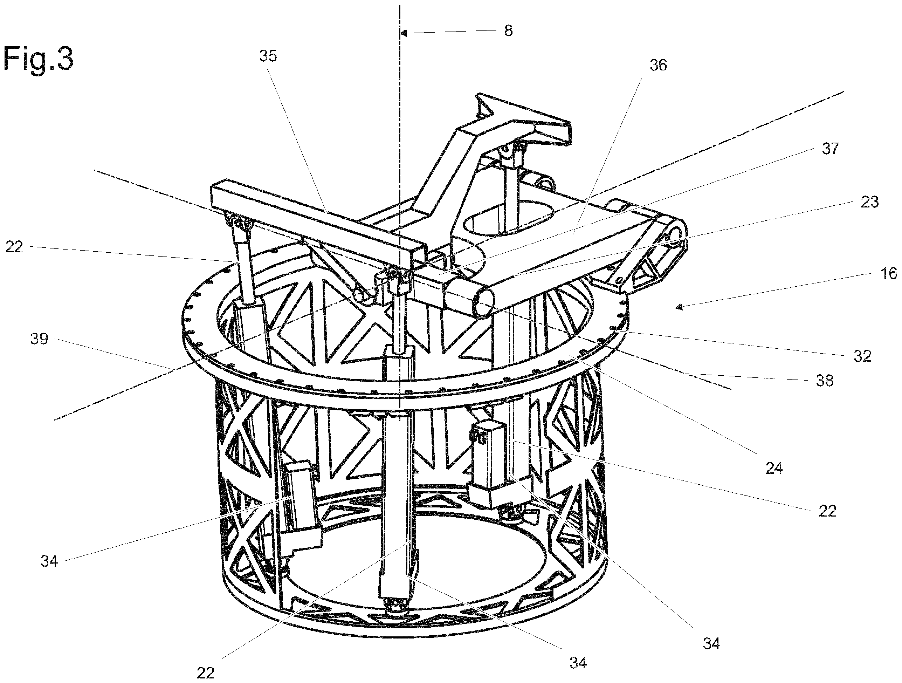

Fig. 3 zeigt eine detaillierte Schrägansicht der Bewegungsvorrichtung 16, der Führungsvorrichtung 23 sowie des Drehträgers 24. Der Drehträger 24 ist wie in den vorangegangenen Ausführungsformen korb- oder wannenförmig ausgeführt. Die in dieser Darstellung vorne befindliche Wand des Drehträgers 24 ist ausgeblendet, um die Klarheit der Ansicht der Parallelkinematikanordnung 22 zu verbessern. Der Drehträger 24 ist in der vorliegenden Ausführungsform korb- oder wannenförmig ausgebildet, wobei zur Gewichtsersparung zumindest Teile des Drehträgers 24 fachwerkartig ausgebildet sein können. Der Drehträger 24 ist ein im Wesentlichen starrer Körper, der über ein Drehträgerlager 32 gegenüber dem Maschinengestell drehbar angeordnet ist. Das Drehträgerlager 32 weist einen feststehenden Teil auf, der beispielsweise mit dem Maschinengestell 1 gekoppelt oder fest verbunden ist. Der bewegliche Teil des Lagers ist mit dem Drehträger 24 fest verbunden oder gekoppelt.

Am Drehträger 24 ist die Bewegungsvorrichtung 16 vorgesehen. Diese umfasst in der vorliegenden Ausführungsform eine Parallelkinematikanordnung 22 die, wie in den vorangegangenen Ausführungsbeispielen beschrieben, als Dreibein oder Tripod ausgeführt ist. Dieser umfasst mehrere Linearantriebe 34, die an einer Seite mit dem Drehträger 24 verbunden sind und an ihrer anderen Seite an der Steuerkanzel 6 oder an dem Steuerkanzelträger 35 angreifen. Die einzelnen Linearantriebe 34 der Parallelkinematikanordnung 22 sind mit dem Drehträger 24 und mit der Steuerkanzel 6 an voneinander beabstandeten Stellen verbunden. Dadurch kann bei unterschiedlicher Bewegung der Linearantriebe 34 eine Neigung bzw. Verschwenkung der Steuerkanzel 6 bewirkt werden, wobei diese Verschwenkbarkeit im Wesentlichen um die Rollachse und/oder um die Nickachse geschieht. Für eine Drehung der Kanzel um die Hochachse, also die Gierachse, die in der vorliegenden Ausführung bevorzugt der Hauptdrehachse 8 entspricht, ist der gesamte Drehträger 24 um die Hauptachse 8 drehbar ausgeführt. Ferner ist am Drehträger 24 die Führungsvorrichtung 23 vorgesehen. Die Führungsvorrichtung 23 umfasst insbesondere einen Hauptarm 36 sowie ein Kreuzgelenk 37. Der Hauptarm 36 weist im Wesentlichen einen Freiheitsgrad auf, der eine Hubbewegung der Steuerkanzel 6 gegenüber dem Maschinengestell 1 ermöglicht. Gelenkig mit dem Hauptarm 36 ist ein Kreuzgelenk 37 vorgesehen, das schwenkbar um eine erste Kreuzgelenkachse 38 mit dem Hauptarm 36 verbunden ist. Das schwenkbare Kreuzgelenk 37 ist ferner mit der Steuerkanzel 6 bzw. mit dem Steuerkanzelträger 35 der Steuerkanzel 6 verbunden.

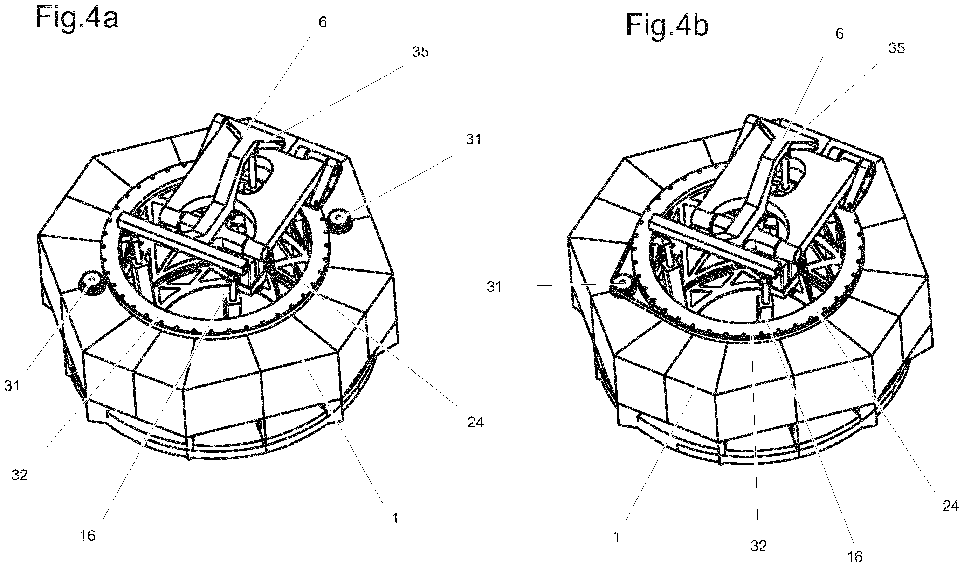

Die Fig. 4a und 4b zeigen zwei unterschiedliche Ausführungsformen eines Drehträgerantriebs 31. Die Steuerkanzel 6 bzw. deren Steuerkanzelträger 35 ist über eine Bewegungsvorrichtung 16 mit dem Maschinengestell 1 gekoppelt. Insbesondere geschieht diese Koppelung über den Drehträger 24. Der Drehträger 24 ist drehbar um die Hauptachse 8 am Maschinengestell 1 vorgesehen. Zur Ermöglichung der Drehung ist ein Drehträgerlager 32 vorgesehen. Zum Antrieb der Drehung des Drehträgers 24 ist ein Drehträgerantrieb 31 vorgesehen.

In Fig. 4a ist der Drehträgerantrieb als Ritzelantrieb ausgeführt, der über ein gedrehtes Rad oder Ritzel eine Drehung des Drehträgers 24 bewirkt. Dabei kann das Ritzel oder das Antriebsrad direkt an einer Außenseite des Drehträgers angreifen, um eine Drehbewegung zu übertragen.

In Fig. 4b ist die Übertragung der Drehung vom Drehträgerantrieb 31 auf den Drehträger 24 über einen Riemen ausgeführt. Dieser kann als glatter Riemen, als Zahnriemen, als Keilriemen, als Kettenantrieb oder als ähnliches Übertragungsmittel ausgeführt sein.

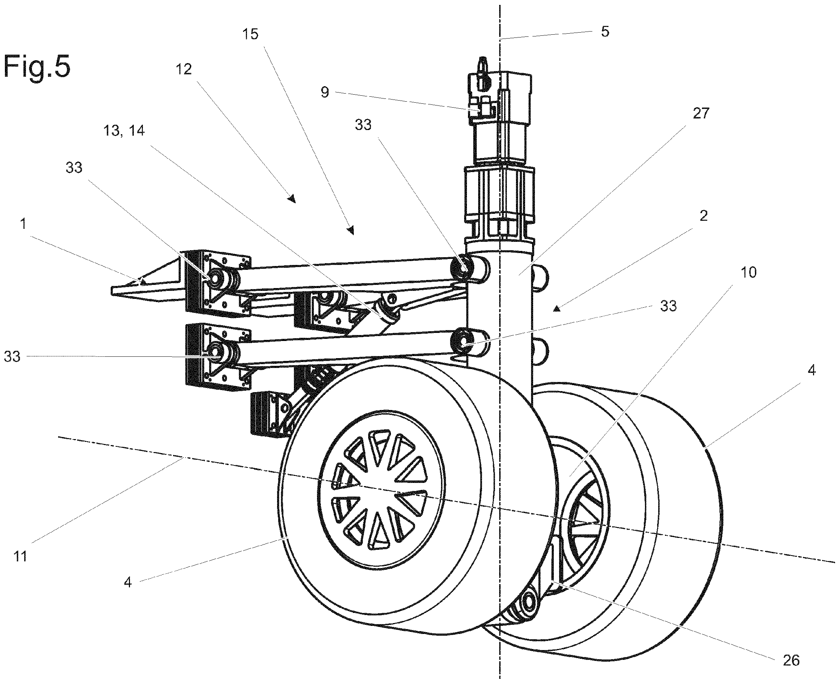

Fig. 5 zeigt eine schematische Seitenansicht eines Details einer Radbaugruppe 2 mit Rädern 4 und einer Kinematikanordnung 12. Diese entspricht beispielsweise einer Radbaugruppe der Ausführungsformen nach den Figuren 1 bis 4 oder 6. In der vorliegenden schematischen Darstellung sind zwei Räder 4 pro Radbaugruppe 2 vorgesehen. Diese sind gegebenenfalls einzeln oder gemeinsam über einen Radantrieb 10 angetrieben. Jedenfalls sind die Räder 4 um eine Radachse 11 drehbar angeordnet, um ein Verfahren des Simulators auf dem Untergrund 3 zu ermöglichen. Gemäß einer bevorzugten Ausführungsform sind die Räder 4 über einen Radträger 26 mit dem Lenker 27 verbunden. Gegebenenfalls greifen die Radlager der Räder 4 in einer alternativen Ausführungsform direkt am Lenker 27 an. In der vorliegenden Ausführungsform ist ein schwenkbar ausgeführter Radträger 26 vorgesehen, um die Lastabtragung gleichmäßig auf beide Räder zu verteilen. Der Lenker 27 dient der Drehung der Räder um die Lenkachse 5. Diese Drehung wird insbesondere durch einen Lenkantrieb 9 bewirkt. Wie in den vorangegangenen Ausführungsformen beschrieben, kann zu diesem Zweck ein eigenständiger Lenkantrieb vorgesehen sein. Gemäß einer weiteren Ausführungsform kann die Lenkung der Räder beispielsweise auch über Drehzahlunterschiede der einzelnen angetriebenen Räder erfolgen.

Die Kinematikanordnung 12 umfasst bevorzugt eine Radaufhängung 15 sowie elastische und/oder dämpfende Elemente wie beispielsweise eine Federdämpferanordnung 14.

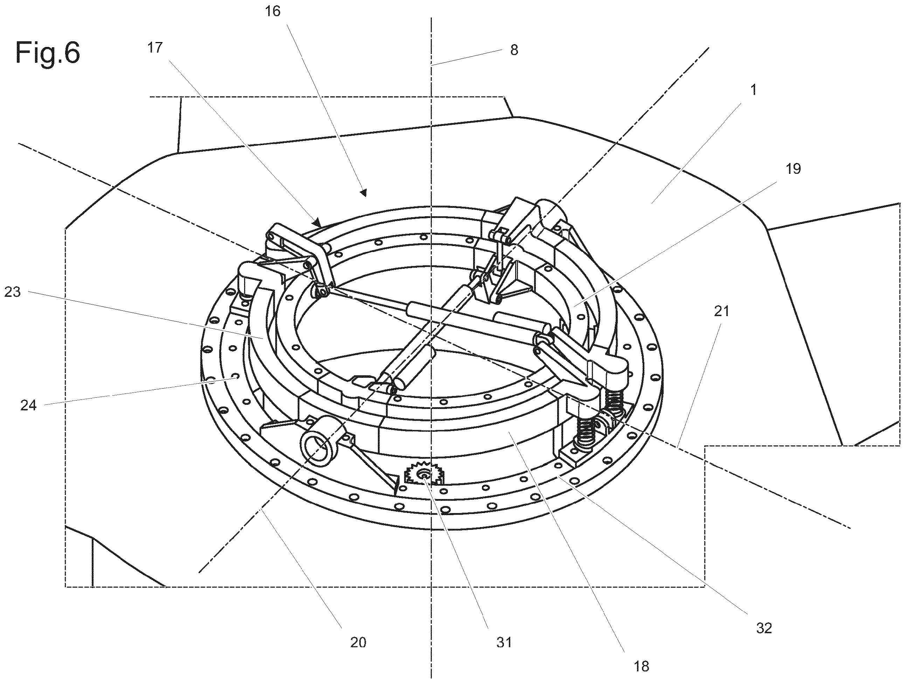

Fig. 6 zeigt eine weitere Ausführungsform einer Bewegungsvorrichtung 16 zur Koppelung der Steuerkanzel 6 mit dem Maschinengestell 1. Diese kann in allen Ausführungsformen die Parallelkinematikanordung und/oder die Führungsvorrichtung ersetzen. In der vorliegenden Ausführungsform umfasst die Bewegungsvorrichtung 16 ein erstes Trägerelement 18, das um eine erste Drehachse 20 schwenkbar mit dem Maschinengestell 1 gekoppelt ist. insbesondere ist das erste Trägerelement 18 um die erste Drehachse 20 schwenkbar mit dem Drehträger 24 verbunden. Um eine zweite Drehachse 21 drehbar, ist ein zweites Trägerelement 19 mit dem ersten Trägerelement 18 verbunden. Die Bewegungsvorrichtung 16 ist bei dieser Ausführungsform als kardanische Aufhängung 17 ausgeführt. Über Drehantriebe oder Linearantriebe können die einzelnen Trägerelemente 18, 19 gegenüber einander und gegenüber dem Maschinengestell bzw. dem Drehträger 24 geneigt bzw. gedreht werden. Dadurch kann die mit dem zweiten Trägerelement 19 verbundenen Steuerkanzel 6 um zwei Drehachsen geneigt werden. Dies ermöglicht eine Neigung der Steuerkanzel 6 um die Nickachse und/oder die Rollachse.

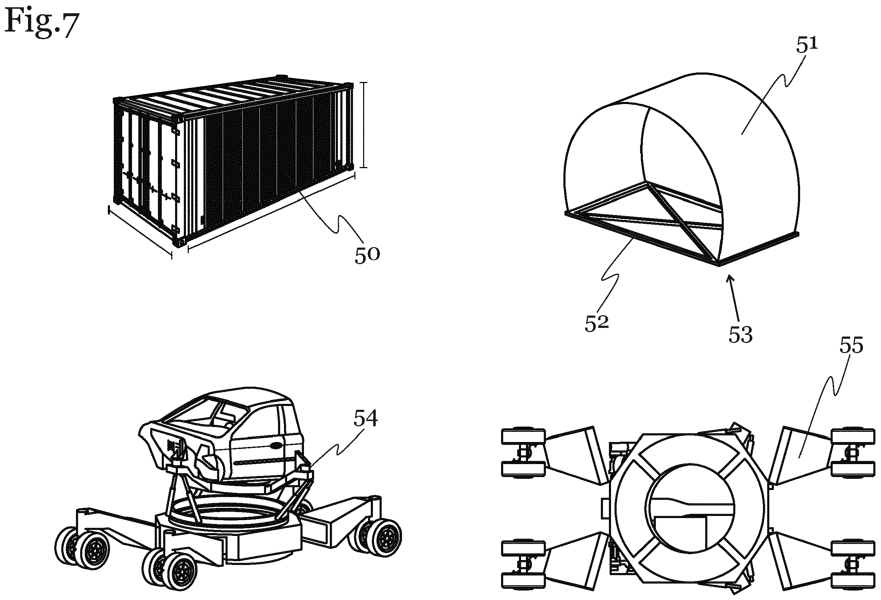

Fig. 7 zeigt einen 20-Fuß Container 50 mit Innenmaßen: 5,710m / 2,352m / 2,385m, Schiebeplane Wechselbrücke: Innenmaße: 7,3m / 2,480m / 2,465m und Abmaßen von einer Breite von 8 Fuß, einer Tiefe von 20 Fuß und einer Höhe von 8 Fuß. Ferner ist eine Projektionsleinwand 51 mit einem Transportgestell 52 dargestellt, wobei die Projektionswand Abmaße von 3,5m / 2,2m / 2m aufweist. Ferner ist eine Plattform mit Tripod Karosserie: mit Abmaßen 5,06m / 2,235m / 2,4m dargestellt. Darüber hinaus ist ein einklappbares Fahrwerk 55 dargestellt. Der Fahrsimulator kann sowohl für einen Betrieb in der Halle (definierter, ebener Untergrund), als auch im Freien auf einem Testgelände (Untergrund uneben, Witterung, Schmutz, ...) betrieben werden. Der wechselnde Einsatz an verschiedenen Freigeländeeinrichtungen und der Testhalle erfordert gegebenenfalls einen einfachen, sicheren Transport, sowie Be- und Entladen des Transportmittels, Ein Sondertransport soll vermieden werden. Konkret kann ein einfacher Transport mittels LKW möglich sein. Das Be- und Entladen kann über eine Rampe, bzw. wenn ein Container verwendet wird mittels Kran erfolgen. Für den Fahrsimulator bedeutet das eine vorzugsweise sternförmige Ausführung des Fahrgestells, dass die Arme des Sternes einklappbar ausgeführt sein können und die Kuppel der Projektion abnehmbar sein kann. D.h. Der Fahrsimulator kann in entsprechend kleine Teile zerlegbar bzw. verformbar sein. Darüber hinaus ist es hilfreich mittels Leichtbauweise eine einfache Handhabung zu ermöglichen. Es werden gegebenenfalls Vorrichtungen für den Ladevorgang und für das Zerlegen, bzw. Zusammenbauen benötigt. Die jeweiligen Verbindungen sollen schnell verschließbar sein und trotzdem die entsprechende Stabilität und Sicherheit im Betrieb gewährleisten.

In allen Ausführungsformen kann der Simulator einen Transportmodus aufweisen, in dem folgende Schritte ausgeführt werden oder sind: Einklappen der Räder; Verriegeln des Fahrwerks in der Transportposition; gegebenenfalls Demontage der Kabine. Die Breite des Fahrzeugs beträgt in der Transportposition beispielsweise unter 3000mm insbesondere ca. 2630mm. Gegebenenfalls müssen dabei die Verkabelung und die Hydraulik nicht getrennt werden

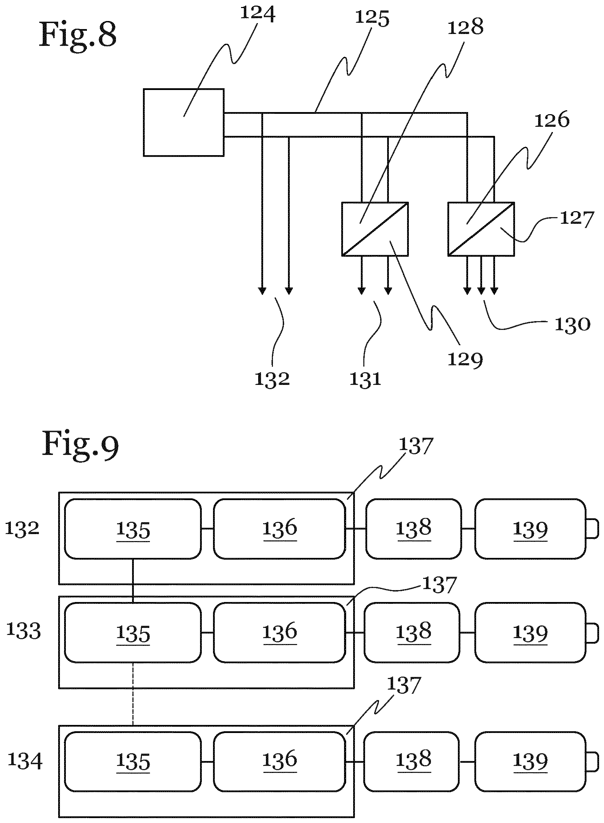

Fig. 8 zeigt eine Verschaltung der Batteriespannung und der Bordspannung und insbesondere eine Batterie 124, eine Leitung mit einer herrschenden Spannung von >750V, einem DC128/DC 129 Bauelement mit einer danach herrschenden Spannung 131 von 24V DC sowie einem DC 126/AC 127 Modul mit einer danach herrschenden Spannung 130 von 400V AC sowie Motoren 132.

Fig. 9 zeigt eine schematische Darstellung mit einem Arm 1 132, einem Arm 2 133, einem Arm N 134, wobei die Arme jeweils eine Energieversorgung 137 mit einem Akkumulator 135 und (Super) Ultra-Caps 136 sowie einen Inverter 138 und einen E-Motor 139 umfassen.

Beispielhafte Ausgestaltung der Batterien insbesondere gemäß Fig. 8. und/oder Fig.9:
Die Grundversorgung erfolgt durch aufladbare Akkumulatoren (Batterien), welche während einer kurzzeitigen Unterbrechung des Betriebes gewechselt werden können. Bei einer entsprechenden Anzahl an Wechselakkus kann somit ein Dauer/Langzeitbetrieb des Simulators sichergestellt werden. Im Unterschied zum Stand der Technik ist der Fahrsimulator damit während des Fahrbetriebes gegebenenfalls unabhängig von äußerer Energiezufuhr, sei es durch Schleppkabel, Schleifkontakte, Seile oder sonstige Einrichtungen. Die Versorgung durch Akkus bietet gegenüber Verbrennungsmotoren Vorteile hinsichtlich Abgasverhalten in geschlossenen Räumen, dem bei Verbrennungsmaschinen üblichen Vibrationen und Lärm und den mitgeführten Kraftstoffen. Die Verwendung von elektrischer Antriebsenergie bietet auch Vorteile hinsichtlich Direktantrieb der Reifen durch in die Räder integrierte Radnabenantriebe, welche sowohl im Fahrbetrieb in beide Richtungen, als auch im Bremsbetrieb in beide Richtungen angesteuert werden, d.h. im vollen 4-Quadranten-Betrieb eingesetzt werden. Die im Bremsbetrieb von den Antrieben entnommene Energie ist bevorzugt vollständig, vorzugsweise elektrisch, zu speichern und für den nächstfolgenden Beschleunigungszyklus zur Verfügung zu stellen. Als geeignete zusätzliche Energiespeicher sind z.B. Ultracaps oder Akkumulatoren einsetzbar. Eine autarke Energieversorgung ermöglicht außerdem den Transport und Einsatz des Simulators auf unterschiedlichen Fahrflächen, auch wenn diese keine Infrastruktur bzgl. der Energieversorgung besitzen.

Exemplarischer Aufbau:
In Figuren ist ein möglicher Aufbau des elektrischen Antriebssystems mit zugehörigem Energiespeicher dargestellt. Dabei dienen die Ultra- bzw. Super-Caps der Zwischenspeicherung/Spannungsglättung des ständig wechselnden Energieflusses. Dieser ist durch die Betriebsstrategie begründet. Jeder Arm des Sterns (bzw. jede Radgondel) besitzt einen zugehörigen Akkumulator. Die einzelnen Akkumulatoren sind aber parallel geschaltet. Dieser Aufbau ermöglicht möglichst kurze Wege des Energieflusses und erlaubt dabei mögliche Ladezustände der Akkumulatoren während der Fahrt auszugleichen.

Beispielhafte Ausgestaltung der Fahrfläche / des Bewegungsraums:
Weitere Anforderungen an die Konstruktion des Fahrsimulators kommen gegebenenfalls vom Betrieb im Freien. Zusätzlich zur kompakten Leichtbauweise kommt eine gewisse Robustheit und Widerstandsfähigkeit. Ein autarkes Antriebssystem und ein Sicherheitskonzept, welche auch im Freien funktionieren sind vorteilhaft.

Da der Fahrsimulator gegebenenfalls auf keine fest installierten Versorgungseinrichtungen angewiesen ist, kann er auf jeder ausreichend ebenen, hinreichend großen und mit geeignetem Belag ausgestatteten Fahrfläche eingesetzt werden. insbesondere kann die Anwendung auf, im Gegensatz zu überdachten Flächen, viel größeren Fahrflächen (praktisch beliebig großen) von einem wesentlich größeren Bewegungsraum profitieren.

Beispielhafte Ausgestaltung des Sicherheitskonzepts, der Steuerung:
Beispielhafte Ausgestaltung - Notbremsung:
Im Falle einer gefährlichen Situation (Simulator außer Kontrolle, Simulator nahe an einer Begrenzung) muss der Simulator bei ausgeschalteten Antrieben zum Stillstand gebracht werden. Die Verzögerung durch die Notbremsung darf dabei nicht so groß sein, dass dadurch zusätzliche Gefährdungen ausgehen. Als Realisierungsmöglichkeiten kommen mechanische Bremsen der einzelnen Radeinheiten und andere Bremsvorrichtungen wie Bremssäcke und federbelastete Bremsschienen infrage. Diese Varianten werden im Folgenden im Detail betrachtet.

Beispielhafte Ausgestaltung - Stillsetzung über gebremste Räder:
Im Normalbetrieb übertragen die Radeinheiten die Längs- und Querkräfte der Reifen über das Fahrwerk auf den zentralen Fahrzeugrahmen, auf dem der Aufbau mit dem Fahrer sitzt. Je nachdem, ob die Lenkung jeder Radeinheit über separate Ansteuerung der beiden Radantriebe oder einen zusätzlichen Lenkantrieb erfolgt, kann bei einer Abschaltung aller Antriebe und Bremsung der Räder (mechanische Bremsen, Hilfsenergie) das Fahrverhalten nur schwer kontrolliert werden. Ein durch die spezielle Fahrwerkskonstruktion realisierter Nachlauf der Radeinheiten kann eventuell die Räder in Fahrtrichtung stabilisieren, falls die Räder nicht blockieren. Ein Blockieren der Räder, und somit näherungsweise gleiche Bremskraft längs und quer zum Rad, und damit Unabhängigkeit vom Lenkwinkel kann in positiver Weise die Not-Stillsetzung ermöglichen. Die Verzögerung würde dann der maximal erzeugbaren Umfangskraft /Querkraft der Reifen- / Fahrbahnkombination bei 100% Schlupf entsprechen.

Beispielhafte Ausgestaltung - Stillsetzung über Bremsschuhe / Bremsplatte:
Dabei wird die anisotrope Bremswirkung eines gebremsten, möglicherweise noch rollenden Rades in Längs- und Querrichtung außer Kraft gesetzt und dafür ein isotropes Kraftübertragungselement zwischen Fahrsimulator und Untergrund eingesetzt. Das Kraftübertragungselement ist eine Platte mit einem auf eine bestimmte Verzögerung abgestimmten Reibbelag, über welchen der Simulator auf dem Untergrund rutscht anstatt mit den Reifen zu rollen. Die Kontur der Aufstandsfläche sollte wegen der geforderten Kippsicherheit möglichst groß sein; die Aufstandsfläche muss bestimmt sein (Ebenheit des Untergrunds) und soll definierte Kräfte (Reibkoeffizient) übertragen. Der Übergang von Fahrbetrieb mit rollenden Reifen auf Bremsbetrieb mit rutschender/n Bremsplatte/n kann insbesondere durch zwei Mechanismen erfolgen:
- die Bremsplatten heben den Simulator an, oder
- die Räder werden z.B. über das Fahrwerk eingezogen und der Simulator sitzt auf den Bremsplatten auf.

Auslöselogik und Auslösemechanismen sind entsprechend in Sicherheitsbauweise auszuführen.

Beispielhafte Ausgestaltung - Stillsetzung über Bremssäcke:
Die Bremswirkung wird durch aufblasbare Bremssäcke erzeugt, die unterhalb des Fahrgestellt angebracht sind. Im Auslösefall werden die Säcke (mindestens jedoch einer) mittels einer ausfallsicheren Hilfseinrichtung (gefüllter Druckspeicher mit Ventil) in kurzer Zeit mit Luft gefüllt und stellen eine entsprechende Reibwirkung zur Fahrbahnoberfläche her. Diese Vorrichtung kann für sich allein oder in Kombination mit den oder zur Unterstützung der o.g. Bremsvorrichtungen zum Einsatz kommen.

Die Bewegungsvorrichtung kann gemäß einer weiteren Ausführungsform passiv oder semipassiv ausgeführt sein. Bei dieser Ausführungsform werden die durch die Bewegung des Fahrsimulators und insbesondere durch die Beschleunigung des Fahrsimulators auftretenden Massenkräfte genutzt, um Nick- oder Wankbewegungen der Steuerkanzel 6 gegenüber dem Maschinengestell 1 zu ermöglichen. So kann die kardanische Aufhängung oder die Parallelkinematikanordnung derart ausgebildet sein, dass durch die grundsätzliche kinematische Anordnung eine Bewegbarkeit der Steuerkanzel gegenüber dem Maschinengestell ermöglicht ist. Über elastische Elemente oder Dämpfelemente wie beispielsweise Feder-Dämpf-Anordnungen können diese kinematischen Freiheitsgrade gedämpft und begrenzt werden. Über beispielsweise steuerbare Ventile oder rheologische Flüssigkeiten kann die Federcharakteristik und/oder die Dämpfungscharakteristik verändert werden.

In weiterer Folge wird das Verfahren zum Betrieb des erfindungsgemäßen Simulators weiter beschrieben. Um beispielsweise ein gerades Anfahren eines Fahrzeugs zu simulieren, führt der Simulator gemäß einer Ausführung des erfindungsgemäßen Verfahrens folgende Schritte aus:
Die angetriebenen Räder werden angetrieben, sodass auf die Person eine geradlinige Beschleunigungskraft wirkt. Gleichzeitig wird die Steuerkanzel gegenüber dem Maschinengestell nach hinten geneigt, sodass dem Fahrer eine leichte Nickbewegung nach hinten vorgespielt wird. Um nun unterschiedliche Anfahrverhalten in Kombination mit Nickbewegungen zu simulieren, können nacheinander bei gleicher Anfahrbeschleunigung unterschiedliche Nickbewegungen simuliert werden. Dadurch kann ermittelt werden, welche der Nickbewegungen für einen Fahrer als realistisch und angenehm empfunden werden.

Um die Anfahrkräfte und insbesondere die Überwindung der Haftreibung zu verbessern und damit eine hochdynamische Simulation zu verbessern, kann das Verfahren zur Simulation einer geradlinigen Beschleunigung beispielsweise folgende Schritte umfassen:
Rotation der Radbaugruppen und des Maschinengestells um die Hauptdrehachse. In diesem Rotationsmodus weisen die Radachsen im Wesentlichen Richtung Zentrum und insbesondere schneiden die Verlängerungen der Radachsen die Hauptachse. Gleichzeitig wird die Steuerkanzel in entgegengesetzte Richtung mit gleicher Drehzahl gedreht, wodurch diese im ortsfesten System gegenüber dem Untergrund unbewegt bleibt. Obwohl die Räder eine gewisse Rollgeschwindigkeit aufweisen, bleibt dabei die Person unbewegt. Zum Anfahren des Simulators können nun die gelenkten Räder derart gelenkt werden, dass sich der Fahrsimulator bei rotierendem Maschinengestell in Bewegung setzt. Diese Bewegung muss jedoch nicht geradlinig sein, sondern kann beispielsweise auch einer Kurvenfahrt oder einer Fahrt entlang einer Zykloide ähneln. Um dabei trotzdem eine lineare Beschleunigung zu simulieren, kann die Steuerkanzel gegenüber dem Maschinengestell über den Drehträger derart verdreht werden, dass die auf den Fahrer wirkende Beschleunigung immer linear in eine Richtung wirkt, obwohl sich der Simulator selbst auf einer Kurvenbahn bewegt.

In allen Ausführungsformen kann vorgesehen sein, dass drei Radbaugruppen, vier Radbaugruppen, fünf oder mehr Radbaugruppen einen oder jeweils einen Radantrieb zum Antrieb eines Rades um die jeweilige Radachse des Rades der jeweiligen Radbaugruppe umfasst.

In allen Ausführungsformen kann vorgesehen sein, dass die Radbaugruppen, insbesondere vier, fünf oder mehr Radbaugruppen von dem Maschinengestell 1 nach außen ragen. Bevorzugt sind die Radbaugruppen 2 etwa gleichmäßig am Umfang des Maschinengestells 1 verteilt angeordnet. Bevorzugt ragen die Radbaugruppen 2 und insbesondere die Kinematikanordnungen 12 im Wesentlichen radial bezüglich der Hauptdrehachse 8 nach außen. Die Hauptdrehachsen der Fahrwerke der Kinematikanordnungen, um die die Räder bzw. die Elemente des Fahrwerks beim Ein- und Ausfedern bewegt bzw. geschwenkt werden, verlaufen gegebenenfalls etwa tangential zu einem um die Hauptdrehachse 8 verlaufenden Kreis, der in einer zum Untergrund parallelen Ebene liegt.

Bei vier Radbaugruppen ragen gegebenenfalls die Radbaugruppen 90° zueinander verdreht von dem Maschinengestell nach außen. Auch die Hauptdrehachsen der Fahrwerke der Kinematikanordnungen, um die die Räder beim Ein- und Ausfedern bewegt werden, verlaufen in diesem Fall bevorzugt etwa 90° verdreht zu den benachbarten Fahrwerken.

In allen Ausführungsformen kann vorgesehen sein, dass die Räder oder das Rad von drei, vier oder fünf Radbaugruppen angetrieben sind oder ist.

In allen Ausführungsformen kann die Führungsvorrichtung 23 derart ausgestaltet sein, dass gewünschte Bewegungen der Steuerkanzel 6 gegenüber dem Maschinengestell 1, wie beispielsweise eine Neigung oder eine Hubbewegung ermöglicht sind, und dass translatorische Bewegungen in einer Parallelebene zum Untergrund 3 gesperrt sind.

In allen Ausführungsformen kann die Kinematikanordnung 12 als Fahrwerk im technischen Sinn ausgebildet sein. Ein Fahrwerk im technischen Sinne ist beispielsweise eine Aneinanderreihung von im Wesentlichen starren Einzelelementen wie beispielsweise Querlenkern, Hebeln oder Armen, deren kinematische Freiheitsgrade zumindest teilweise durch eine Feder-Dämpfer-Anordnung beschränkt sind. Die im Wesentlichen starren Elemente sind insbesondere über Drehlager, Schwenklager oder andere Lagerungen miteinander verbunden.

Gegebenenfalls kann in allen Ausführungsformen die Bewegungsvorrichtung 16 als Bewegungsvorrichtung gemäß Fig. 6 eingesetzt werden.

In allen Ausführungsformen kann vorgesehen sein, dass die erfindungsgemäße Vorrichtung und das Maschinengestell 1 der erfindungsgemäßen Vorrichtung, insbesondere des Fahrsimulators, in unterschiedliche und/oder beliebige Richtungen verfahren werden kann. Insbesondere weist der Simulator dadurch keine ausgeprägte Vorzugs-Bewegungsrichtung auf. Auch die Kinematikanordnungen 12 der Radbaugruppen 2 sind bevorzugt dazu geeignet und/oder eingerichtet, das Verfahren des Simulators in unterschiedliche, beliebige Richtungen zu ermöglichen.

Ferner kann das Fahrwerk Anregungen durch Bodenunebenheiten derart dämpfen, dass diese durch die im Simulator sitzende Person nicht oder nur geringfügig wahrnehmbar sind. Der Einsatz einer Fahrwerkskinematik ermöglicht zusätzlich den Nick- und Wankpol des Simulators konstruktiv zu bestimmen, um so einen Nick- und Wankausgleich zu ermöglichen. Ferner sind die Radstellungsgrößen wie beispielsweise Spur, Sturz etc. gegebenenfalls dynamisch einstellbar. Die Einbindung eines Nachlaufs des Reifens ist ebenfalls möglich.

Aufgrund der nicht feststehenden Orientierung der Räder zur Fahrtrichtung ist die Fahrwerkskinematik gegebenenfalls so ausgelegt, dass ein Nick- und Wankausgleich möglich ist, der von der Radstellung und der Fahrtrichtung abhängig ist. Gegebenenfalls kann in allen Ausführungsformen vorgesehen sein, dass eine Verbindung von zwei oder mehreren Kinematikanordnungen des Simulators vorgesehen ist. Diese als Stabilisator wirkende Verbindung kann hydraulisch, elektrisch oder mechanisch ausgeführt sein.

### Bezugszeichenliste:

- 1.: Maschinengestell
- 2.: Radbaugruppe
- 3.: Untergrund
- 4.: Rad
- 5.: Lenkachse
- 6.: Steuerkanzel
- 7.: Sitz
- 8.: Hauptdrehachse
- 9.: Lenkantrieb
- 10.: Radantrieb
- 11.: Radachse
- 12.: Kinematikanordnung
- 13.: Elastische und/oder dämpfende Elemente
- 14.: Feder-Dämpfer-Anordnung
- 15.: Radaufhängung
- 16.: Bewegungsvorrichtung
- 17.: Kardanische Aufhängung
- 18.: erstes Trägerelement
- 19.: zweites Trägerelement
- 20.: erste Drehachse
- 21.: zweite Drehachse
- 22.: Parallelkinematikanordnung
- 23.: Führungsvorrichtung
- 24.: Drehträger
- 25.: Radaufstandsflächen
- 26.: Radträger
- 27.: Lenker
- 28.: Cockpit
- 29.: Öffnung der steuerkanzel
- 30.: Energiespeicher
- 31.: Drehträgerantrieb
- 32.: Drehträgerlager
- 33.: Lager der Kinematikanordnung
- 34.: Linearantrieb
- 35.: Streuerkanzelträger
- 36.: Hauptarm
- 37.: Kreuzgelenk
- 38.: Erste Kreuzgelenksachse
- 39.: Zweite Kreuzgelenksachse
- 40.: Außenhülle

## Patentansprüche

1. Selbstfahrender Fahrsimulator mit einem Maschinengestell (1), das über drei, bevorzugt vier oder mehr Radbaugruppen (2) auf einem Untergrund (3) verfahrbar ist,
wobei die Radbaugruppen (2) jeweils zumindest ein auf dem Untergrund (3) verfahrbares Rad (4) umfassen, das um eine Lenkachse (5) drehbar angeordnet ist, wobei das Maschinengestell (1) mit einer Steuerkanzel (6) gekoppelt ist, die einen Sitz (7) für eine Person sowie Bedienelemente zur Steuerung des Fahrsimulators umfasst, wobei eine Bewegungsvorrichtung vorgesehen ist, über die eine Neigung der Steuerkanzel (6) gegenüber dem Maschinengestell (1) um eine Nickachse und/oder eine Rollachse ermöglicht ist,
und wobei zumindest eine Radbaugruppe (2) einen Radantrieb (10) zum Antrieb eines Rades (4) um die Radachse (11) umfasst, wobei bevorzugt mehrere Radbaugruppen (2) oder alle Radbaugruppen (2) jeweils zumindest einen Radantrieb (10) zum Antrieb eines Rades (4) um die jeweilige Radachse (11) umfassen,
**dadurch gekennzeichnet,**
**dass** die Radbaugruppen (2) und/oder die Räder (4) über eine Kinematikanordnung (12), die insbesondere als Fahrwerk ausgestaltet ist, mit dem Maschinengestell (1) verbunden sind, wobei die Kinematikanordnung (12) zur Dämpfung und/oder Federung von Unebenheiten des Untergrundes (3) elastische und/oder dämpfende Elemente (13) wie beispielsweise eine Feder-Dämpfer-Anordnung (14) und eine Radaufhängung (15) umfasst.

2. Fahrsimulator nach Anspruch 1, **dadurch gekennzeichnet, dass** das Rad (4) oder dass die Räder (4) jeder Radbaugruppe (2) über 360°, insbesondere beliebig, unbegrenzt und/oder in beide Drehrichtungen um die Lenkachse (5) drehbar sind und/oder dass die Räder einer, zweier, dreier, oder aller Radbaugruppen (2) über einen Lenkantrieb (9) aktiv lenkbar um die jeweilige Lenkachse (5) drehbar angeordnet sind.

3. Fahrsimulator nach einem der Ansprüche 1 bis 2, **dadurch gekennzeichnet, dass** pro Radbaugruppe (2) zwei Räder (4) vorgesehen sind.

4. Fahrsimulator nach Anspruch 2 oder 3, **dadurch gekennzeichnet, dass** der Lenkantrieb (9) durch einen Drehantrieb der Lenkachse (5) ausgebildet ist;
oder dass der Lenkantrieb (9) durch einen Drehzahlunterschied zweier beabstandeter und um ihre jeweilige Radachse (11) angetriebener Räder (4) einer Radbaugruppe (2) angetrieben, gebildet oder unterstützt ist,
oder dass der Lenkantrieb (9) durch einen Drehantrieb der Lenkachse (5) und durch einen Drehzahlunterschied zweier beabstandeter und um ihre jeweilige Radachse (11) angetriebener Räder (4) einer Radbaugruppe (2) gebildet ist.

5. Fahrsimulator nach einem der Ansprüche 1 bis 4, **dadurch gekennzeichnet, dass** über die Kinematikanordnung (12) eine Relativbewegung des Maschinengestells (1) gegenüber dem Untergrund (3), den Rädern (4) und/oder den Radbaugruppen (2) ermöglicht ist.

6. Fahrsimulator nach einem der Ansprüche 1 bis 5, **dadurch gekennzeichnet, dass** die Steuerkanzel (6) gegenüber dem Maschinengestell (1) einen Drehfreiheitsgrad aufweist, sodass die Steuerkanzel (6) gegenüber dem Maschinengestell (1) um eine Hauptdrehachse (8) gedreht werden kann, wobei die Hauptdrehachse (8) bevorzugt im Wesentlichen ein Normalvektor der durch die Radaufstandsflächen (24) der Räder (4) auf dem Untergrund (3) aufgespannten Ebene ist, und/oder dass eine Bewegungsvorrichtung (16) vorgesehen ist, über die die Steuerkanzel (6) mit dem Maschinengestell (1) verbunden ist, wobei durch die Bewegungsvorrichtung (16) eine aktive Drehung der Steuerkanzel (6) gegenüber dem Maschinengestell (1) um die Hauptdrehachse (8) ermöglicht ist.

7. Fahrsimulator nach einem der Ansprüche 1 bis 6, **dadurch gekennzeichnet, dass** über die Bewegungsvorrichtung (16) eine translatorische Bewegung der Steuerkanzel (6) gegenüber dem Maschinengestell (1) ermöglicht ist, wobei eine Parallelverschiebung der Steuerkanzel (6) gegenüber dem Maschinengestell (1) und/oder eine Hubbewegung der Steuerkanzel (6) gegenüber dem Maschinengestell (1) ermöglicht ist.

8. Fahrsimulator nach einem der Ansprüche 1 bis 7, **dadurch gekennzeichnet, dass** eine kardanische Aufhängung (17) vorgesehen ist, über die die Steuerkanzel (6) gegenüber dem Maschinengestell (1) geneigt werden kann, wobei bevorzugt zwei Trägerelemente (18,19) vorgesehen sind, wobei das erste Trägerelement (18) um eine erste Drehachse (20) neigbar mit dem Maschinengestell (1) verbunden ist, wobei das zweite Trägerelement (19) um eine zweite Drehachse (21) neigbar mit dem ersten Trägerelement (18) verbunden ist und wobei die erste Drehachse (20) und die zweite Drehachse (21) im Wesentlichen orthogonal zueinander verlaufen.

9. Fahrsimulator nach einem der Ansprüche 1 bis 7, **dadurch gekennzeichnet, dass** eine Parallelkinematikanordnung (22) vorgesehen ist, über die die Steuerkanzel (6) gegenüber dem Maschinengestell (1) geneigt werden kann, wobei die Parallelkinematikanordnung (22) bevorzugt als Dreibein, als hydraulisches Dreibein, als pneumatisches Dreibein, als elektrisch angetriebenes Dreibein, als Sechsbein, als hydraulisches Sechsbein, als pneumatisches Sechsbein oder als elektrisch angetriebenes Sechsbein ausgebildet ist.

10. Fahrsimulator nach einem der Ansprüche 1 bis 9, **dadurch gekennzeichnet, dass** eine Führungsvorrichtung (23) vorgesehen ist, die einerseits mit der Steuerkanzel (6) und andererseits mit dem Maschinengestell (1) oder einem Teil der Bewegungsvorrichtung (16) gekoppelt ist, wobei die Führungsvorrichtung (23) derart ausgestaltet ist, dass
- eine Drehung der Steuerkanzel (6) gegenüber dem Maschinengestell (1) um die Hauptdrehachse (8),
- eine Neigung der Steuerkanzel (6) gegenüber dem Maschinengestell (1) um die Nickachse und/oder die Rollachse,
und eine translatorische Hubbewegung der Steuerkanzel (6) gegenüber dem Maschinengestell (1) ermöglicht sind
wobei alle anderen Freiheitsgrade der Steuerkanzel (6) gegenüber dem Maschinengestell (1) durch die Führungsvorrichtung (23) im Wesentlichen gesperrt sind.

11. Fahrsimulator nach einem der Ansprüche 1 bis 10, **dadurch gekennzeichnet, dass** der Fahrsimulator als autark verfahrbarer und von einer Person aus der Steuerkanzel steuerbarer Fahrsimulator ausgebildet ist,
wobei mitfahrend mit dem Maschinengestell verbunden und über die Radbaugruppen am Untergrund abgestützt, ein Lenkantrieb zur Lenkung des Fahrsimulators, und ein Energiespeicher zur Bereitstellung der Energie für die Antriebe des Radantriebs, des Lenkantriebs und der Bewegungsvorrichtung vorgesehen sind.

12. Fahrsimulator nach einem der Ansprüche 1 bis 11, **dadurch gekennzeichnet, dass** eine Außenhülle (40) vorgesehen ist, die mit der Steuerkanzel oder dem Maschinengestell starr verbunden ist und dass die Außenhülle (40) als Hohlkörper ausgeführt ist, der die Steuerkanzel, ein Cockpit und/oder den Sitz zur Aufnahme der Person zumindest teilweise, bevorzugt vollständig umgibt.

13. Fahrsimulator nach einem der Ansprüche 1 bis 12, **dadurch gekennzeichnet,**
- **dass** an den einzelnen Radeinheiten mechanische Bremsen vorgesehen sind,
- und/oder dass an dem Fahrsimulator, insbesondere aufblasbare, Bremssäcke, federbelastete Bremsschienen, Bremschuhe und/oder Bremsplatte vorgesehen sind.

14. Fahrsimulator nach einem der Ansprüche 1 bis 13, **dadurch gekennzeichnet,**
- **dass** die Bewegungsvorrichtung (16) als kardanische Aufhängung (17) oder als Parallelkinematik-Vorrichtung ausgeführt ist,
- oder dass die Bewegungsvorrichtung (16) eine Parallelkinematikanordnung (22) umfasst, welche insbesondere als Dreibein oder als sogenannter Tripod, als hydraulisches Dreibein, als pneumatisches Dreibein, als elektrisch angetriebenes Dreibein, als Sechsbein, als hydraulisches Sechsbein, als pneumatisches Sechsbein oder als elektrisch angetriebenes Sechsbein ausgebildet ist.

15. Fahrsimulator nach einem der Ansprüche 1 bis 14, **dadurch gekennzeichnet,**
- **dass** eine Verbindung von zwei oder mehreren Kinematikanordnungen (12) des Fahrsimulators vorgesehen ist,
- und **dass** diese als Stabilisator wirkende Verbindung gegebenenfalls hydraulisch, elektrisch oder mechanisch ausgeführt ist.

## Claims

1. A self-propelled driving simulator with a machine frame (1), which can be moved on a ground (3) via three, preferably four or more, wheel assemblies (2),
wherein the wheel assemblies (2) each comprise at least one wheel (4), which can be moved on the ground (3) and is arranged so as to be rotatable about a steering axis (5), wherein the machine frame (1) is coupled to a control cabin (6), which comprises a seat (7) for a person and operating elements for controlling the driving simulator,
wherein a movement device is provided, via which the control cabin (6) is enabled to be inclined relative to the machine frame (1) about a pitch axis and/or a roll axis,
and wherein at least one wheel assembly (2) comprises a wheel drive (10) for driving a wheel (4) about the wheel axis (11), wherein preferably multiple wheel assemblies (2) or all wheel assemblies (2) each comprise at least one wheel drive (10) for driving a wheel (4) about the respective wheel axis (11),
**characterized**
**in that** the wheel assemblies (2) and/or the wheels (4) are connected to the machine frame (1) via a kinematic arrangement (12), which in particular is designed as a chassis, the kinematic arrangement (12) comprising elastic and/or damping elements (13) such as for example a spring-damper arrangement (14) and a wheel suspension (15) for damping and/or attenuating uneven ground (3).

2. The driving simulator according to claim 1, **characterized in that** the wheel (4) or the wheels (4) of each wheel assembly (2) are rotatable by 360°, in particular arbitrarily, unlimitedly and/or in both directions of rotation about the steering axis (5) and/or **in that** the wheels of one, two, three or all wheel assemblies (2) are arranged so as to be rotatable about the respective steering axis (5), actively steerable via a steering drive (9).

3. The driving simulator according to one of claims 1 to 2, **characterized in that** two wheels (4) are provided per wheel assembly (2).

4. The driving simulator according to one of claims 2 to 3, **characterized in that** the steering drive (9) is formed by a rotary drive of the steering axis (5);
or **in that** the steering drive (9) is driven, formed or supported by a difference in the rotational speed between two spaced wheels (4) of a wheel assembly (2), which are driven about their respective wheel axis (11),
or **in that** the steering drive (9) is formed by a rotary drive of the steering axis (5) and by a difference in the rotational speed between two spaced wheels (4) of a wheel assembly (2), which are driven about their respective wheel axis (11).

5. The driving simulator according to one of claims 1 to 4, **characterized in that** the kinematic arrangement (12) allows a relative movement of the machine frame (1) relative to the ground (3), the wheels (4) and/or the wheel assemblies (2).

6. The driving simulator according to one of claims 1 to 5, **characterized in that** the control cabin (6) has a rotational degree of freedom relative to the machine frame (1), so that the control cabin (6) can be rotated relative to the machine frame (1) about a main axis of rotation (8), the main axis of rotation (8) preferably being substantially a normal vector of the plane defined by the wheel contact surfaces (24) of the wheels (4) on the ground (3), and/or **in that** a movement device (16) is provided, via which the control cabin (6) is connected to the machine frame (1), wherein the movement device (16) enables an active rotation of the control cabin (6) relative to the machine frame (1) about the main axis of rotation (8).

7. The driving simulator according to one of claims 1 to 6, **characterized in that** the movement device (16) allows a translatory movement of the control cabin (6) relative to the machine frame (1), wherein a parallel displacement of the control cabin (6) relative to the machine frame (1) and/or a lifting movement of the control cabin (6) relative to the machine frame (1) is allowed.

8. The driving simulator according to one of claims 1 to 7, **characterized in that** a gimbal (17) is provided, by means of which the control cabin (6) can be inclined relative to the machine frame (1), wherein two support elements (19) are preferably provided, wherein the first support element (18) is connected to the machine frame (1) so as to be inclinable about a first axis of rotation (20), wherein the second support element (19) is connected to the first support element (18) so as to be inclinable about a second axis of rotation (21), and wherein the first axis of rotation (20) and the second axis of rotation (21) are substantially orthogonal to each other.

9. The driving simulator according to one of claims 1 to 7, **characterized in that** a parallel kinematic arrangement (22) is provided, by means of which the control cabin (6) can be inclined relative to the machine frame (1), wherein the parallel kinematic arrangement (22) is preferably designed as a tripod, as a hydraulic tripod, as a pneumatic tripod, as an electrically driven tripod, as a hexapod, as a hydraulic hexapod, as a pneumatic hexapod or as an electrically driven hexapod.

10. The driving simulator according to one of claims 1 to 9, **characterized in that** a guiding device (23) is provided, which is coupled on the one hand to the control cabin (6) and on the other hand to the machine frame (1) or a part of the movement device (16), wherein the guiding device (23) is designed in such a way that
- a rotation of the control cabin (6) relative to the machine frame (1) about the main axis of rotation (8),
- an inclination of the control cabin (6) relative to the machine frame (1) about the pitch axis and/or the roll axis,
and a translatory lifting movement of the control cabin (6) relative to the machine frame (1) are possible,
wherein all other degrees of freedom of the control cabin (6) are substantially blocked relative to the machine frame (1) by the guiding device (23).

11. The driving simulator according to one of claims 1 to 10, **characterized in that** the driving simulator is designed as a driving simulator which can be moved autonomously and can be controlled by a person from the control cabin, wherein a steering drive for steering the driving simulator, and an energy storage for providing the energy for the drives of the wheel drive, the steering drive and the movement device are provided, which are coupled to the machine frame so as to move therewith and are supported on the ground via the wheel assemblies.

12. The driving simulator according to one of claims 1 to 11, **characterized in that** an outer shell (40) is provided, which is rigidly connected to the control cabin or the machine frame, and **in that** the outer shell (40) is configured as a hollow body which at least partially, preferably completely, surrounds the control cabin, a cockpit and/or the seat for accommodating the person .

13. The driving simulator according to one of claims 1 to 12, **characterized**
- **in that** mechanical brakes are provided on the individual wheel units,
- and/or in that, in particular inflatable, drag chutes, spring-loaded brake rails, brake shoes and/or brake plates are provided on the driving simulator.

14. The driving simulator according to one of claims 1 to 13, **characterized**
- **in that** the movement device (16) is configured as a gimbal (17) or as a parallel kinematic device,
- or in that the movement device (16) comprises a parallel kinematic arrangement (22), which is designed in particular as a tripod, as a hydraulic tripod, as a pneumatic tripod, as an electrically driven tripod, as a hexapod, as a hydraulic hexapod, as a pneumatic hexapod or as an electrically driven hexapod.

15. The driving simulator according to one of claims 1 to 14, **characterized**
- **in that** a connection of two or more kinematic arrangements (12) of the driving simulator is provided,
- and that this connection, which acts as a stabiliser, may be hydraulically, electrically or mechanically designed.

## Revendications

1. Simulateur de conduite automoteur avec un bâti de machine (1) qui peut être déplacé sur un sol (3) par l'intermédiaire de trois, de préférence quatre ou plusieurs ensembles de roues (2),
dans lequel les ensembles de roues (2) comprennent chacun au moins une roue (4) qui peut se déplacer sur le sol (3) et qui est disposée de manière à pouvoir tourner autour d'un essieu directeur (5), dans lequel le bâti de machine (1) est couplé à une poste de commande (6) qui comprend un siège (7) pour une personne et des éléments de commande pour la commande du simulateur de conduite,
dans lequel il est prévu un dispositif de déplacement qui permet d'incliner la poste de commande (6) par rapport au bâti de machine (1) autour d'un axe de tangage et/ou d'un axe de roulis,
et dans lequel au moins un ensemble de roues (2) comprend un entraînement de roue (10) pour entraîner une roue (4) autour de l'axe de roue (11), dans lequel de préférence plusieurs ensembles de roues (2) ou tous les ensembles de roues (2) comprennent chacun au moins un entraînement de roue (10) pour entraîner une roue (4) autour de l'axe de roue (11) respectif,
**caractérisée**
**en ce que** les ensembles de roues (2) et/ou les roues (4) sont relié(e)s au bâti de machine (1) par un ensemble cinématique (12) conçu en particulier comme un châssis, l'ensemble cinématique (12) comprenant des éléments (13) élastiques et/ou amortisseurs, tels que par exemple un ensemble ressort-amortisseur (14) et une suspension de roue (15), pour l'amortissement et/ou la suspension des aspérités du sol (3).

2. Simulateur de conduite selon la revendication 1, **caractérisé en ce que** la roue (4) ou les roues (4) de chaque ensemble de roues (2) peuvent tourner sur 360°, en particulier arbitrairement, indéfiniment et/ou dans les deux sens de rotation autour de l'essieu directeur (5) et/ou **en ce que** les roues d'une, de deux, de trois ou de tous les ensembles de roues (2) sont disposées de manière rotative autour de l'essieu directeur (5) respectif, dirigeables activement par l'intermédiaire d'un entraînement de direction (9).

3. Simulateur de conduite selon l'une des revendications 1 à 2, **caractérisé en ce que** deux roues (4) sont prévues par ensemble de roues (2).

4. Simulateur de conduite selon la revendication 2 ou 3, **caractérisé en ce que** l'entrainement de direction (9) est formé par un entrainement rotatif de l'essieu directeur (5) ;
ou **en ce que** l'entrainement de direction (9) est entraîné, formé ou supporté par une différence de vitesse de deux roues (4) d'un ensemble de roues (2) qui sont espacées et entraînées autour de leur axe de roue (11) respectif,
ou **en ce que** l'entraînement de direction (9) est formé par un entraînement rotatif de l'essieu directeur (5) et par une différence de vitesse de deux roues (4) d'un ensemble de roues (2) qui sont espacées et entraînées autour de leur axe de roue (11) respectif.

5. Simulateur de conduite selon l'une des revendications 1 à 4, **caractérisé en ce qu'**un mouvement relatif du bâti de machine (1) par rapport au sol (3), aux roues (4) et/ou aux ensembles de roues (2) est permis par l'ensemble cinématique (12).

6. Simulateur de conduite selon l'une des revendications 1 à 5, **caractérisé en ce que** la poste de commande (6) a un degré de liberté de rotation par rapport au bâti de machine (1), de sorte que la poste de commande (6) peut être tournée par rapport au bâti de machine (1) autour d'un axe de rotation principal (8), l'axe de rotation principal (8) étant de préférence sensiblement un vecteur normal du plan défini par les surfaces de contact de roues (24) des roues (4) sur le sol (3), et/ou **en ce qu'**il est prévu un dispositif de déplacement (16) par lequel le poste de commande (6) est relié au bâti de machine (1), dans lequel le dispositif de déplacement (16) permet une rotation active de la poste de commande (6) par rapport au bâti de machine (1) autour de l'axe de rotation principal (8),

7. Simulateur de conduite selon l'une des revendications 1 à 6, **caractérisé en ce qu'**un mouvement de translation de la poste de commande (6) par rapport au bâti de machine (1) est permis par le dispositif de déplacement (16), dans lequel un déplacement parallèle de la poste de commande (6) par rapport au bâti de machine (1) et/ou un mouvement de levage de la poste de commande (6) par rapport au bâti de machine (1) est permis.

8. Simulateur de conduite selon l'une des revendications 1 à 7, **caractérisé en ce qu'**il est prévu une suspension à cardan (17), au moyen de laquelle la poste de commande (6) peut être inclinée par rapport au bâti de machine (1), dans lequel de préférence deux éléments de support (19) sont prévus, dans lequel le premier élément de support (18) est relié au bâti de machine (1) de manière à pouvoir être incliné autour d'un premier axe de rotation (20), dans lequel le deuxième élément de support (19) est relié au premier élément de support (18) de manière à pouvoir être incliné autour d'un deuxième axe de rotation (21), et dans lequel le premier axe de rotation (20) et le deuxième axe de rotation (21) sont sensiblement orthogonaux l'un par rapport à l'autre.

9. Simulateur de conduite selon l'une des revendications 1 à 7, **caractérisé en ce qu'**il est prévu un ensemble de cinématique parallèle (22), au moyen duquel la poste de commande (6) peut être incliné par rapport au bâti de machine (1), l'ensemble de cinématique parallèle (22) étant de préférence réalisé sous la forme d'un trépied, d'un trépied hydraulique, d'un trépied pneumatique, d'un trépied à entraînement électrique, d'un hexapode, d'un hexapode hydraulique, d'un hexapode pneumatique ou d'un hexapode à entraînement électrique.

10. Simulateur de conduite selon l'une des revendications 1 à 9, **caractérisé en ce qu'**il est prévu un dispositif de guidage (23) qui est couplé d'une part à la poste de commande (6) et d'autre part au bâti de machine (1) ou à une partie du dispositif de déplacement (16), le dispositif de guidage (23) étant conçu de telle sorte que
- une rotation de la poste de commande (6) par rapport au bâti de machine (1) autour de l'axe de rotation principal (8),
- une inclinaison du poste de commande (6) par rapport au bâti de la machine (1) autour de l'axe de tangage et/ou de l'axe de roulis,
et un mouvement de levage translatoire du poste de commande (6) par rapport au bâti de la machine (1) sont permis,
tous les autres degrés de liberté de la poste de commande (6) étant sensiblement bloqués par rapport au bâti de machine (1) par le dispositif de guidage (23).

11. Simulateur de conduite selon l'une des revendications 1 à 10, **caractérisé en ce que** le simulateur de conduite est conçu comme un simulateur de conduite qui peut être déplacé de manière autarcique et peut être contrôlé par une personne à partir de la poste de commande, dans lequel un entraînement de direction pour diriger le simulateur de conduite et un réservoir d'énergie pour fournir l'énergie aux entraînements de l'entraînement de roue, de l'entraînement de direction et du dispositif de déplacement sont prévus et sont reliés au bâti de machine de manière à se déplacer avec celle-ci et appuyés sur le sol par l'intermédiaire des ensembles de roues.

12. Simulateur de conduite selon l'une des revendications 1 à 11, **caractérisé en ce qu'**il est prévu une enveloppe extérieure (40) qui est reliée de manière rigide à la poste de commande ou au bâti de machine, et **en ce que** l'enveloppe extérieure (40) est conçue comme un corps creux qui entoure la poste de commande, un cockpit et/ou le siège pour recevoir la personne au moins partiellement, de préférence complètement.

13. Simulateur de conduite selon l'une des revendications 1 à 12, caractérisé
- que des freins mécaniques sont prévus sur les différentes entités de roue,
- et/ou en ce que des frein parachutes, en particulier gonflables, des rails de frein chargés par ressort, des sabots de frein et/ou des plaquettes de frein sont prévus sur le simulateur de conduite.

14. Simulateur de conduite selon l'une des revendications 1 à 13, **caractérisé**
- **en ce que** le dispositif de déplacement (16) est conçu comme une suspension à cardan (17) ou comme un dispositif à cinématique parallèle,
- ou en ce que le dispositif de déplacement (16) comprend un ensemble de cinématique parallèle (22) qui est conçu en particulier comme un trépied, un trépied hydraulique, un trépied pneumatique, un trépied à entraînement électrique, un hexapode, un hexapode hydraulique, un hexapode pneumatique ou un hexapode à entraînement électrique.

15. Simulateur de conduite selon l'une des revendications 1 à 14, **caractérisé**
- **en ce qu'**il est prévu une liaison de deux ou plusieurs ensembles cinématiques (12) du simulateur de conduite,
- et **en ce que** ladite liaison agissant comme stabilisateur est, le cas échéant, réalisée de manière hydraulique, électrique ou mécanique.
